# EUROPEAN PATENT SPECIFICATION

(11) **EP 4 531 754 B1**
(45) Date of publication and mention of the grant of the patent: **06.05.2026**
(21) Application number: 23738342.7
(22) Date of filing: 24.05.2023
(51) Int. Cl.: A61C 7/14

(54) **INDIRECT BONDING TRAY FOR ORTHODONTIC APPLIANCE**
ÜBERTRAGUNGSSCHIENE FÜR EINE ORTHODONTISCHE VORRICHTUNG
PORTE-EMPREINTE DE COLLAGE INDIRECT POUR APPAREIL ORTHODONTIQUE

(30) Priority: 25.05.2022 US 202263345568 P
(43) Date of publication of application: 09.04.2025
(73) Proprietor: Lightforce Orthodontics Inc., Wilmington, MA 01887 (US)
(72) Inventor: VANNOY, Samuel, Burlington, MA 01803 (US); WINCHELL, Dylan, Burlington, MA 01803 (US)
(74) Representative: Eisenführ Speiser
(86) International application number: PCT/US2023/067426
(87) International publication number: WO 2023/230528

(56) References cited:
- CN-A- 111 991 108
- CN-U- 211 355 976
- US-A1- 2014 349 241

## Description

### FIELD

The techniques described herein relate generally to dental appliances and, more particularly, to exemplary indirect bonding trays for orthodontic appliances.

### BACKGROUND

Correct placement of orthodontic appliances for straight-wire orthodontic treatments can be important for orthodontic treatments, including to avoid undesirable tooth movements and/or extended treatment times. Such placement may be performed by direct or indirect bonding of appliances. Direct bonding can be carried out by placing the appliances directly on teeth, one tooth at a time, and not on a model, such as a plaster model. Indirect bonding of appliances can be carried out by placing the appliances on a model of a patient's teeth and transferring the model onto the patient's teeth for bonding of the appliances. Indirect bonding can achieve greater accuracy and/or effectiveness of straight-wire orthodontic treatments compared to direct placement of appliances by a clinical professional.

US 2014/349241 A1 provides an orthodontic device-setting tool with: a fitting section having a fitting surface, which covers and fits together with at least one of the incisal margin, the dental cusp, or the occlusal surface of a tooth; a foundation section, which has a back surface that adheres closely to the labial/buccal surface or the lingual surface of the tooth and has, on the surface opposite the back surface, a front face on which the orthodontic device is mounted; and a connecting section that connects the fitting section and the foundation section. The tool has a frame section, which protrudes from the front face of the foundation section and can fit together with the orthodontic device. Use of the orthodontic device-setting tool makes it possible to mount orthodontic devices such as corrective brackets without holding the patient for long periods of time and to mount the orthodontic devices accurately at the desired three-dimensional mounting positions for the orthodontic devices regardless of the skill level of the dentist practitioner. Moreover, the tool can even be used with mass-produced general purpose orthodontic devices, which are not orthodontic devices that have been specially customized as to design, cut, etc. for individual patients.

CN 111991108 A discloses an indirectly-pasted bracket transfer guide plate and an installation and separation method thereof. The bracket transfer guide plate comprises occlusion parts used for being matched with tooth occlusal surfaces and bracket clamps used for fixing brackets, and the bracket clamps comprise lip-direction pressing pieces and retention assemblies, wherein the lip-direction pressing pieces are connected with the occlusion parts and apply acting force through self-deformation to enable the brackets to be attached to the tooth lip side faces, the retention assemblies comprises a plurality of retention arms oppositely arranged in the tooth arrangement direction, and positioning parts acting with the brackets are arranged at the ends, away from the occlusion parts, of all the retention arms correspondingly; release grooves are formed between all the retention arms and the lip-direction pressing pieces correspondingly; and a clamping space for constraining the brackets is formed by all the retention arms, all the positioning parts, all the lip-direction pressing pieces and the tooth lip side faces in an enclosed mode. According to the technical scheme, through arrangement of the lip-direction pressing pieces and the retention assemblies, the advantages of high positioning precision in the bracket mounting process and easy separation in the bracket transfer guide plate dismounting process are both considered, meanwhile, the structure is simple and stable, and high popularization value is achieved.

CN 211355976 U discloses a positioning unit, a positioner and a positioning method of an orthodontic bracket, the positioning unit of the orthodontic bracket comprises a bracket positioning block and an occlusion positioning block which are detachably connected with each other; the occlusal positioning block is used for coupling occlusal surfaces of teeth; wherein the bracket positioning blockis used for coupling an orthodontic bracket and releasing the orthodontic bracket to teeth, the bracket positioning block is provided with an arch wire channel in the mesio-distal direction, and the arch wire channel is used for allowing an arch wire arranged in an arch wire groove of the orthodontic bracket to pass through. According to the positioning unit and the positioner, the arch wire groove is prevented from being occupied, the arch wire channel and the orthodontic bracket capable of being coupled with and carrying the arch wire are arranged, the arch wire is carried during indirect bonding, the operation time and operation steps are reduced, the pain of a patient is relieved, the workload of a doctor is reduced, and the development of an orthodontic technology is greatly promoted.

### SUMMARY OF THE DISCLOSURE

The invention is as defined in the appended claims.

In accordance with the disclosed subject matter, exemplary indirect bonding trays for orthodontic appliances are provided.

Some embodiments relate to an indirect bonding tray for transferring an orthodontic appliance to a tooth. The exemplary indirect bonding tray comprises an occlusal base having an outer perimeter and defining a first impression conforming to a first occlusal tooth surface and a second impression conforming to at least a portion of a second occlusal tooth surface; and a buccal wall defining a well to releasably engage the orthodontic appliance, the buccal wall extending outwards beyond the outer perimeter of the occlusal base, wherein: the buccal wall and the well are in a first region of the indirect bonding tray associated with the first impression; the first region is adjacent to a second region of the indirect bonding tray associated with the second impression; and an outer wall of the second region extends to the outer perimeter of the occlusal base.

The disclosure further relates to an exemplary indirect bonding tray for transferring an orthodontic appliance to a tooth. The exemplary indirect bonding tray comprises an occlusal base defining (i) a first impression with a first end and a second end and conforming to at least a first portion of a first occlusal tooth surface and (ii) a second impression with a third end and a fourth end and conforming to at least a second portion of a second occlusal tooth surface, the at least second portion less than the at least one first portion, a first width defined by the first end and the second end greater than a second width defined by the third end and the fourth end; and a buccal wall defining a well to releasably engage the orthodontic appliance and extending substantially orthogonally from the occlusal base and the first end.

Some aspects relate to an apparatus for constructing an indirect bonding tray for transferring an orthodontic appliance to a tooth, the apparatus comprising: a memory to store instructions; and a processor configured to execute the instructions to: obtain dentition data associated with a patient; generate a computer model of teeth of the patient, the computer model to identify placement of the orthodontic appliance to the tooth; and cause construction, using an additive manufacturing process, of the indirect bonding tray based on at least one of the dentition data or the computer model, the indirect bonding tray comprising: an occlusal base having an outer perimeter and defining a first impression conforming to a first occlusal tooth surface and a second impression conforming to at least a portion of a second occlusal tooth surface; and a buccal wall defining a well to releasably engage the orthodontic appliance, the buccal wall extending outwards beyond the outer perimeter of the occlusal base, wherein: the buccal wall and the well are in a first region of the indirect bonding tray associated with the first impression; the first region is adjacent to a second region of the indirect bonding tray associated with the second impression; and an outer wall of the second region extends to the outer perimeter of the occlusal base.

Some aspects relate to at least one non-transitory computer-readable storage medium comprising instructions that, when executed, cause a processor to: obtain dentition data associated with a patient; generate a computer model of teeth of the patient, the computer model to identify placement of an orthodontic appliance to one of the teeth; and cause construction, using an additive manufacturing process, of an indirect bonding tray based on at least one of the dentition data or the computer model, the indirect bonding tray comprising: an occlusal base having an outer perimeter and defining a first impression conforming to a first occlusal tooth surface and a second impression conforming to at least a portion of a second occlusal tooth surface; and a buccal wall defining a well to releasably engage the orthodontic appliance, the buccal wall extending outwards beyond the outer perimeter of the occlusal base, wherein: the buccal wall and the well are in a first region of the indirect bonding tray associated with the first impression; the first region is adjacent to a second region of the indirect bonding tray associated with the second impression; and an outer wall of the second region extends to the outer perimeter of the occlusal base.

Some aspects relate to a method for constructing an indirect bonding tray for transferring an orthodontic appliance to a tooth. The exemplary method comprises measuring dentition data associated with a patient; generating a computer model of teeth of the patient, the computer model to identify placement of the orthodontic appliance to one of the teeth; and constructing, using an additive manufacturing process, the indirect bonding tray based on at least one of the dentition data or the computer model, the indirect bonding tray comprising: an occlusal base having an outer perimeter and defining a first impression conforming to a first occlusal tooth surface and a second impression conforming to at least a portion of a second occlusal tooth surface; and a buccal wall defining a well to releasably engage the orthodontic appliance, the buccal wall extending outwards beyond the outer perimeter of the occlusal base, wherein: the buccal wall and the well are in a first region of the indirect bonding tray associated with the first impression; the first region is adjacent to a second region of the indirect bonding tray associated with the second impression; and an outer wall of the second region extends to the outer perimeter of the occlusal base.

The foregoing summary is not intended to be limiting. Moreover, various aspects of the present disclosure may be implemented alone or in combination with other aspects.

### BRIEF DESCRIPTION OF FIGURES

In the drawings, each identical or nearly identical component that is illustrated in various figures is represented by a like reference character. For purposes of clarity, not every component may be labeled in every drawing. The drawings are not necessarily drawn to scale, with emphasis instead being placed on illustrating various aspects of the techniques and devices described herein.
FIG. 1A depicts a perspective view of an exemplary indirect bonding tray for transferring an orthodontic appliance to a tooth, according to some embodiments.
FIG. 1B depicts a side view of the exemplary indirect bonding tray of FIG. 1A.
FIG. 2A depicts a side perspective view of another exemplary indirect bonding tray that includes an exemplary perforation defined in an occlusal base of the indirect bonding tray.
FIG. 2B depicts a bottom perspective view of the exemplary indirect bonding tray of FIG. 2A.
FIG. 3A depicts a perspective view of a first side of yet another exemplary indirect bonding tray that includes an exemplary perforation defined in an occlusal base of the indirect bonding tray and omits buccal and lingual walls.
FIG. 3B depicts a perspective view of a second side of the exemplary indirect bonding tray of FIG. 3A.
FIG. 4 depicts a perspective view of an exemplary indirect bonding tray that includes a plurality of impressions including partial impressions.
FIG. 5A depicts a perspective view of another exemplary indirect bonding tray that is configured to be releasably engaged with a first tooth and supported at least in part by a second tooth.
FIG. 5B depicts a bottom perspective view of the exemplary indirect bonding tray releasably engaged to a first tooth.
FIG. 6 shows an example appliance manufacturing system including an electronic device and an additive manufacturing system for construction of indirect bonding trays as disclosed herein, according to some embodiments.
FIG. 7 is a flowchart representative of example machine-readable instructions that may be executed by processor circuitry to implement the electronic device of FIG. 6 for construction of indirect bonding trays as disclosed herein, according to some embodiments.
FIG. 8 is an exemplary electronic platform structured to execute the machine-readable instructions of FIG. 7 to implement the electronic device of FIG. 6, according to some embodiments.

### DETAILED DESCRIPTION

The present application relates to indirect bonding trays. The present application provides example implementations of an indirect bonding tray for orthodontic appliances. The present application also provides example techniques for designing and/or manufacturing the same.

Dental treatment plans, such as orthodontic treatment plans, may include performing sequence(s) of operations with dental hardware to achieve a desired outcome for a patient. Non-limiting examples of desired outcomes include an aesthetic outcome and/or a dental health outcome. For example, an aesthetic outcome may be the straightening of one or more teeth, which is a typical outcome of orthodontic treatment plans. An exemplary dental health outcome may be the separation of abutting teeth to achieve the proper spacing between them for promotion of gum and/or teeth health.

Orthodontic treatment plans may be carried out using indirect bonding trays (which can also be referred to as indirect bond trays). An indirect bonding tray may be constructed based on a model of a patient's mouth. The tray may include impressions for respective teeth of the patient's mouth. The tray may include hollow spaces configured as bores, cavities, and/or wells defined to receive an appliance, such as a bracket, for bonding to teeth that fit the impressions. A clinical professional, such as a dentist, an orthodontist, etc., may place the appliances in the hollow spaces. The clinical professional may transfer and secure the tray into the patient's oral cavity. The clinical professional may bond the appliances to the respective teeth and remove the tray from the patient's oral cavity.

The inventors have recognized several challenges in using indirect bonding trays for orthodontic appliance placement. For example, the inventors have recognized that one challenge of using an indirect bonding tray is that particular teeth can be difficult to access due to their position in a patient's mouth. For example, posterior teeth can be difficult to access and keep dry during bonding of the appliance due to their position in a patient's mouth.

The inventors have recognized that another challenge of using an indirect bonding tray can be having the necessary support or surface area to support appliance bonding. For example, in many instances, including only a single molar in the tray does not provide the necessary support or surface area to be able to reliably hold, place, and secure the tray and bond the appliance.

The inventors have recognized that yet another challenge of using an indirect bonding tray to bond an appliance to a tooth can be that tray placement can be affected by, and/or interfere with, appliances adjacent to the targeted tooth. For example, it may not be desirable to use a tray that spans the full arch, or a segmented tray that spans two or more teeth, if one or more brackets or tubes have already been bonded to teeth that neighbor the target tooth for appliance bonding and, therefore, will interfere with placement of the tray.

The inventors have developed example indirect bonding trays for orthodontic appliances and example techniques for designing and/or manufacturing the same. The techniques described herein can, for example, overcome the aforementioned challenges and/or other challenges. In one aspect, the technology disclosed herein can facilitate bonding of an appliance, including aiding accurate placement of the appliance and providing stability to the tray, while avoiding interference with other appliances that are already bonded to the patient's teeth. In some embodiments, the tray can be formed with an integral handle, or a handle can be formed in the tray, to support accurate placement of the appliance. Advantageously, clinical professionals can benefit from the size and shape of the example trays disclosed herein, which are easier to place and hold. Beneficially, the size and shape of the example trays disclosed herein can enhance the clinical professional's ability to place the tray in the back of the patient's mouth while still ensuring a secure fit and accurate placement of the appliance.

In some embodiments, an indirect bonding tray can be constructed to bond an orthodontic appliance to anterior or posterior teeth. Beneficially, such indirect bonding trays can overcome the challenge of conventional indirect bonding trays accessing posterior teeth. In some embodiments, a tooth targeted for bonding is a pre-molar or molar (e.g., a first, second, or third molar). In some embodiments, the indirect bonding tray is for a second molar (sometimes referred to as a "7"). In some embodiments, the orthodontic appliance can be a bracket, a molar tube, or an auxiliary appliance (e.g., a hook, button, or bite turbo).

In some embodiments, an indirect bonding tray can include a perforation defined in an occlusal base of the tray and between first and second impressions of the tray. Beneficially, the perforation can be configured to separate the occlusal base so that only a region of the first impression remains for bonding the orthodontic appliance. In some embodiments, the perforation can include a portion of the second impression so that the first impression is substantially or fully intact and the second impression is a partial impression. For example, the perforation can be at a distal region of the second impression.

In some embodiments, an indirect bonding tray can include one or more recesses defined in an occlusal base of the tray. In some such embodiments, the recess(es) is/are on a surface of the tray opposite the impressions of the tray. Beneficially, the recess(es) can be configured to be engageable with a tool, such as pliers or tweezers, during positioning of the tray by a clinical professional. Additionally or alternatively, the recess(es) can be configured to be engageable with the clinical professional's fingers. Beneficially, such recess(es) can overcome the challenge of conventional indirect bonding trays lacking the necessary support or surface area to secure the tray in the patient's mouth.

In some embodiments, additive manufacturing (e.g., three-dimensional (3D) printing) techniques can be utilized to directly form the trays, instead of constructing models (e.g., physical models) of the patient's dentition and molding trays over the models. In some embodiments, additive manufacturing can form the trays as custom trays based on the patient's teeth. For example, additive manufacturing can form an indirect bonding tray such that the tray can selectively engage one or more teeth. In some such embodiments, the tray can be constructed such that an appliance can be bonded to a first tooth while appliances already bonded to surrounding teeth can be avoided. Beneficially, such custom trays can overcome the challenge of existing appliances in a patient's mouth interfering with the placement of conventional indirect bonding trays.

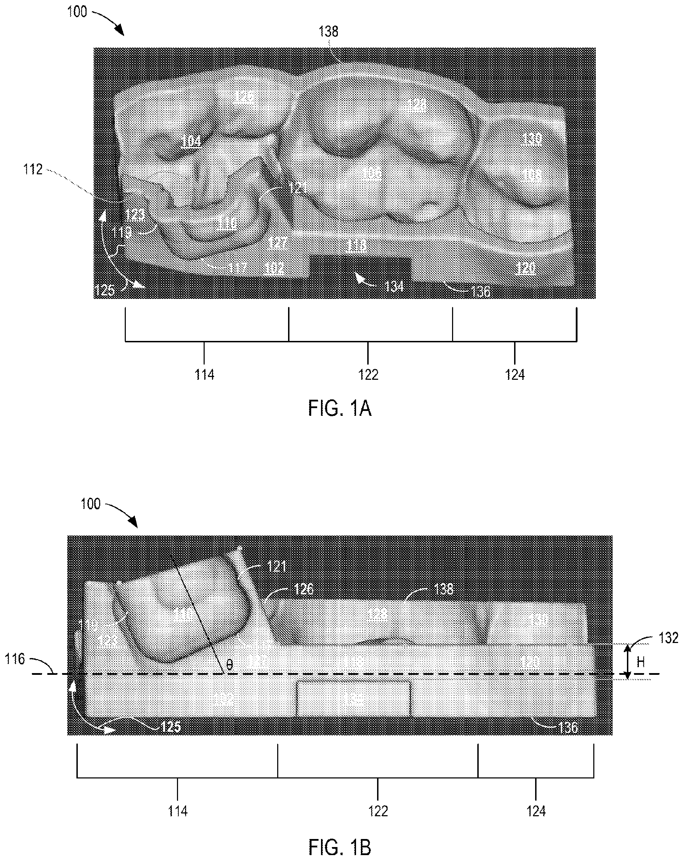

Turning to the figures, the illustrated examples of FIG. 1A and FIG. 1B depict a perspective view and a side view, respectively, of an exemplary indirect bonding tray 100 for transferring an orthodontic appliance to a tooth. Non-limiting examples of appliances, such as orthodontic appliances, include a bracket (e.g., an orthodontic bracket), a molar tube, and an auxiliary appliance. Non-limiting examples of auxiliary appliances include a bite turbo, a button, or a hook.

The tray 100 includes an occlusal base 102 defining a first impression 104 that can conform an occlusal surface of the tooth, a second impression 106 that can conform to at least a portion of an occlusal surface of a second tooth, and a third impression 108 that can conform to at least a portion of an occlusal surface of a third tooth. In some embodiments, the first impression 104 is distal of the second impression 106. In some embodiments, the first impression 104 is mesial of the second impression 106. In some embodiments, the tooth corresponding to the first impression 104 can be a second molar and the tooth corresponding to the second impression 106 can be configured to releasably reengage with a first molar.

In some embodiments, the second impression 106 and/or the third impression 108 conform(s) to only a portion of the occlusal surface of the applicable tooth and does not conform to the entire occlusal surface. For example, the second impression 106 and/or the third impression 108 can be a partial impression that can aid placement of the tray 100 and provide stability for more accurate placement of the appliance.

The tray 100 includes a first buccal wall 110 defining at least a hollow space 112. For example, the hollow space 112 can be configured as a bore, a cavity, a hole, or a well to releasably engage the orthodontic appliance. The first buccal wall 110 extends substantially orthogonally (e.g., 90 degrees, 90 degrees +/- 1 degree, 90 degrees +/- 2 degrees, etc.) from the occlusal base 102 in a first region 114 of the first impression 104. The hollow space 112, and/or, more generally, the first buccal wall 110 that defines the hollow space 112, is angled and/or otherwise offset from a longitudinal axis 116 of the tray 100 by angle θ (or 180 degrees minus θ). In this example, at least one of a base 117 of the first buccal wall 110 or one or more sides 119, 121 can be offset at the angle θ relative to the longitudinal axis 116. In this example, the hollow space 112, and/or, more generally, the first buccal wall 110 that defines the hollow space 112, can be offset at the angle θ relative to the second surface 138. In this example, the first buccal wall 110 is also defined by and/or includes side regions 123, 127.

The tray 100 also includes a second buccal wall 118 and a third buccal wall 120. Alternatively, the second and/or third buccal walls 118, 120 may be absent. The second buccal wall 118 of this example is in a second region 122 of the second impression 106. For example, the second buccal wall 118 can extend above the occlusal base 102. The third buccal wall 120 of this example is in a third region 124 of the third impression 108 For example, the third buccal wall 120 can extend above the occlusal base 102. In the illustrated examples, the height of the first buccal wall 110 above the occlusal base 102 is greater than the heights of the second and third buccal walls 118, 120. Alternatively, the height of the second buccal wall 118 and/or the height of the third buccal wall 120 may be the same as the height of the first buccal wall 110.

In the illustrated example, the first buccal wall 110 is in the first region 114 and extends outwards (e.g., substantially orthogonally) from an outer perimeter 125 of the occlusal base 102. The first region 114 is adjacent to and/or abuts the second region 122. The second region 122 is adjacent to and/or abuts the third region 124. In the illustrated example, the second region 122 and the third region 124 extend to the outer perimeter 125 of the occlusal base 102. For example, an outer wall of the second region 122, such as the second buccal wall 118, can extend to the outer perimeter 125 of the occlusal base 102. In some such embodiments, the second buccal wall 118 and the third buccal wall 120 do not extend beyond the outer perimeter 125 of the occlusal base 102. For example, the second buccal wall 118 and the third buccal wall 120 do not extend beyond the outer perimeter 125 of the occlusal base 102 because they are not configured to releasably engage an appliance for bonding to a tooth.

The tray 100 of the illustrated example includes a first lingual wall 126 configured to cover at least a portion of a lingual surface of the tooth. Alternatively, the tray 100 may include a portion of the first lingual wall 126. Alternatively, the tray 100 may not include the first lingual wall 126.

The tray 100 of the illustrated example includes a second lingual wall 128 configured to cover at least a portion of a lingual surface of the second tooth. Alternatively, the tray 100 may include a portion of the second lingual wall 128. Alternatively, the tray 100 may not include the second lingual wall 128 such that the second lingual wall 128 is absent.

The tray 100 of the illustrated example includes a third lingual wall 130 configured to cover at least a portion of a lingual surface of the third tooth. Alternatively, the tray 100 may include a portion of the third lingual wall 130. Alternatively, the tray 100 may not include the third lingual wall 130 such that the third lingual wall 130 is absent.

Beneficially, buccal walls and/or lingual walls can be designed to avoid interference with appliances already bonded to the second and/or third tooth. For example, absent, partial, or full buccal or lingual wall(s), or any combination(s) thereof, can aid placement of the tray 100 in a patient's oral cavity and provide stability for more accurate placement of the appliance, while allowing the buccal or lingual wall(s) to avoid interference with other previously bonded appliances (e.g., existing appliances on teeth associated with the second and third impressions 106, 108)

By way of example, as depicted in FIGS. 1A-1B, the second and third lingual walls 126, 128 extend more gingivally than the opposing second and third buccal walls 118, 120. The tooth associated with the first impression 104 may not have an appliance while the teeth associated with the second and third impressions 106, 108 have appliances already bonded to them. Beneficially, the second and third buccal walls 118, 120 can be configured to extend from the occlusal base 102 to a height 132 (identified by H) to create a space (e.g., an opening) to accommodate the existing appliances while preventing their interference with the placement of the tray 100.

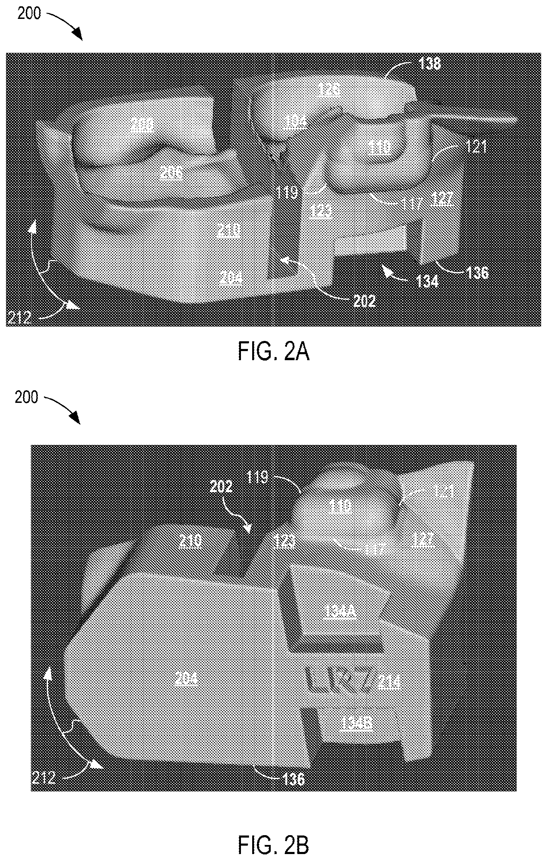

In the illustrated examples, the tray 100 includes one or more recesses 134 defined in the occlusal base 102. The one or more recesses 134 are also depicted in FIGS. 2A and/or 2B for enhanced clarity. The one or more recesses 134 are on a first surface 136 of the tray 100 opposite a second surface 138 of the impressions 104, 106, 108. For example, the first surface 136 can be a bottom surface of the tray 100 and the second surface 138 can be a top surface of the tray 100. For example, the first buccal wall 110 can extend above the second surface 138, such as the second surface 138 of the first region 114, the second region 122, and/or the third region 124. In some embodiments, the one or more recesses 134 can be implemented by cut-out(s), opening(s), space(s), or hollow section(s).

The one or more recesses 134 in this example are positioned below the second impression 106. For example, the occlusal base 102 can be tapered underneath the second impression 106 to accommodate the one or more recesses 134. Additionally or alternatively, the one or more recesses 134 may be positioned below the first impression 104 and/or the third impression 108. In some embodiments, a first one of the recesses 134 can be positioned below the first impression 104, a second one of the recesses 134 can be positioned below the second impression 106, and/or a third one of the recesses 134 can be positioned below the third impression 108. In some embodiments, the one or more recesses 134 can be configured to be engageable with pliers during positioning of the tray 100 by a clinical professional. Additionally or alternatively, the one or more recesses 134 may be configured to be engageable with the clinical professional's fingers. Non-limiting examples of pliers include Weingart pliers and anterior bracket tweezers.

In some embodiments, the tray 100 can be formed as two or more pieces. For example, the tray 100 can be formed by a first portion (e.g., an impression portion) that includes impressions, such as the impressions 104, 106, 108, and a second portion (e.g., a handle portion) that can include the one or more recesses 134. For example, the portion of the occlusal base 102 that includes the one or more recesses 134, and/or, more generally, the occlusal base 102, can form a handle by which a clinical professional can use to place the tray 100. In some embodiments, a manufacturer (e.g., an indirect bonding tray manufacturer) or a clinical professional can assemble at least the first and second portions prior to appliance bonding.

FIG. 2A and FIG. 2B depict a side perspective view and a bottom perspective view, respectively, of another indirect bonding tray 200 that includes a perforation 202 defined in an occlusal base 204 of the indirect bonding tray 200. The indirect bonding tray 200 of the illustrated examples of FIGS. 2A-2B includes the first impression 104, the first buccal wall 110, the first lingual wall 126, the one or more recesses 134 (identified as 134A and 134B in FIG. 2B), the first surface 136, and the second surface 138 of FIGS. 1A-1B. For example, the indirect bonding tray 100 of FIGS. 1A-1B can be constructed to releasably engage a first tooth corresponding to the first impression 104, a second tooth, and a third tooth. In some embodiments, the indirect bonding tray 200 of FIGS. 2A-2B can be constructed to releasably engage the first tooth and a fourth tooth corresponding to a fourth impression 206.

The perforation 202 of the illustrated examples is defined in the occlusal base 204 between the first impression 104 and the fourth impression 206. In some embodiments, the perforation 202 can be configured and/or used to separate the occlusal base 204 so that only the first impression 104 region remains for bonding the orthodontic appliance. Beneficially, the perforation 202 can be configured such that the fourth impression 206 (and/or surrounding structure(s)) can be broken off, separated, and/or otherwise removed from the first impression 104 before placement of the tray 200 in the circumstances that the teeth have shifted relative to each other since the time of the scan that led to the construction of the tray 200. In some such exemplary circumstances, the portion of the tray 200 that includes the fourth impression 206 can be removed to effectuate placement of the first impression 104 on a tooth that corresponds to the first impression 104 without interference from the fourth impression 206 that may no longer fit an adjacent tooth.

In some embodiments, the perforation 202 can include a portion of the fourth impression 206 so that the first impression 104 is substantially intact (e.g., 90% intact, 95% intact, 99% intact) or fully intact (e.g., 100% intact) and the fourth impression 206 is a partial impression. For example, the perforation 202 can be at a distal region of the fourth impression 206.

In the illustrated examples of FIGS. 2A-2B, the tray 200 includes the first lingual wall 126, opposite the first buccal wall 110, and a fourth lingual wall 208, opposite a fourth buccal wall 210. In these examples, the first lingual wall 126 and the fourth lingual wall 208 are at the same or substantially the same height (e.g., the heights can be within 1%, 2%, etc., of each other to account for manufacturing tolerances) with respect to the occlusal base 204. Alternatively, the heights of the first lingual wall 126 and the fourth lingual wall 208 may be different.

In the illustrated examples, the height of the first buccal wall 110 is greater than the height of the fourth buccal wall 210. For example, the first buccal wall 110 can be higher than the fourth buccal wall 210 because the fourth tooth to be releasably engaged by the fourth buccal wall 210 may already have an installed appliance. In some such embodiments, the fourth buccal wall 210 is lower than the first buccal wall 110 to create an opening for which the installed appliance may be disposed. Beneficially, the differing buccal wall heights can enable the placement of the tray 200 without interference from previously bonded appliances. Alternatively, the heights of the first buccal wall 110 and the fourth lingual wall 208 may be the same or substantially the same.

The tray 200 of the illustrated examples includes a pair of the recesses 134 including a first recess 134A and a second recess 134B. The recesses 134A, 134B are defined in the occlusal base 204 in the region of the first impression 104 (e.g., the first region 114 of FIGS. 1A-1B). The recesses 134A, 134B extend inward of the occlusal base 204 from an outer perimeter 212 of the tray 200. For example, the outer perimeter 212 can be an outer border, edge, or periphery of the tray 200. The recesses 134A, 134B are separated by a portion 214 of the occlusal base 204.

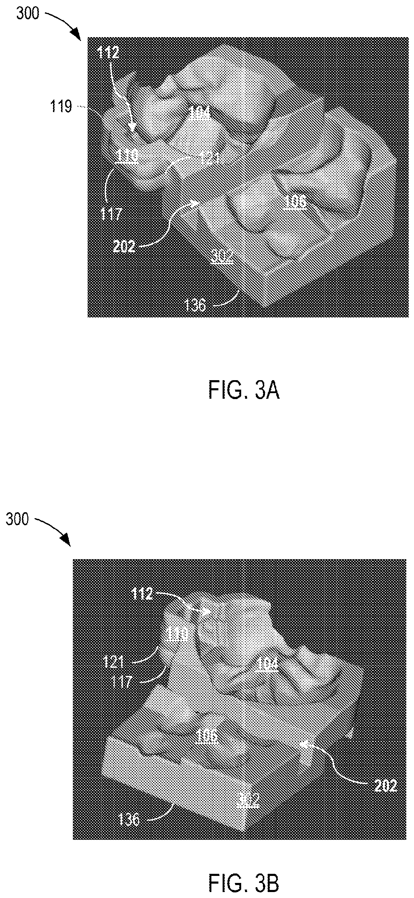

FIG. 3A and FIG. 3B depict a perspective view of a first side and a perspective view of a second side, respectively, of yet another indirect bonding tray 300 that includes a perforation defined in an occlusal base of the indirect bonding tray and omits buccal and lingual walls. The indirect bonding tray 300 of these examples includes the first impression 104, a portion of the second impression 106, the first buccal wall 110, and the first surface 136 of FIGS. 1A-1B. Further depicted in the illustrated examples are the perforation 202 of FIGS. 2A-2B defined in an occlusal base 302 of the tray 100 between the first impression 104 and the portion of the second impression 106.

In the illustrated examples of FIGS. 3A-3B, the second impression 106 is a partial impression of the second impression 106. Beneficially, the tray 300 can be configured such that the second impression 106 can be used to support bonding of an appliance to a tooth that corresponds to the first impression 104. By way of example, the tray 300 can be configured such that the first buccal wall 110 defines the hollow space 112 to receive an appliance for bonding to a tooth that corresponds to the first impression 104. In such an embodiment, the second impression 106 can correspond to a second tooth that has an existing appliance. Beneficially, in such an embodiment, the tray 300 can be configured such that a portion of the second impression 106 can be used to mate to the second tooth and thereby provide additional support and/or surface area to improve appliance bonding to the first tooth and with less material. Beneficially, the tray 300 can be a reduced form of the tray 100 of FIGS. 1A-1B and thereby uses less material to construct the tray 300 (with respect to the tray 100 of FIGS. 1A-1B) because only a portion of the second impression 106 is utilized.

In the illustrated examples of FIGS. 3A-3B, the tray 300 does not have lingual walls. The tray 300 also does not have additional buccal wall(s) to the first buccal wall 110, which further reduces a quantity of material needed to construct the tray 300 while providing the support and/or surface area for improved appliance bonding.

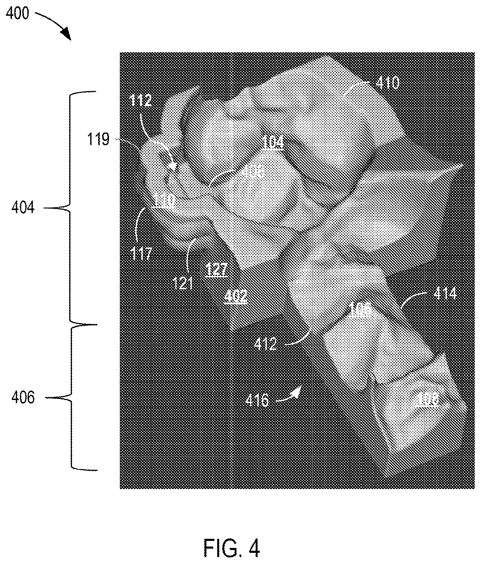

FIG. 4 depicts a perspective view of another indirect bonding tray 400 that includes a plurality of impressions including partial impressions. The tray 400 of this example includes the first impression 104, the first buccal wall 110, the hollow space 112, a portion of the second impression 106, and a portion of the third impression 108 of FIGS. 1A-1B.

The tray 400 of the illustrated example includes an occlusal base 402, which includes a first region 404 and a second region 406. The first region 404 includes the first impression 104 for the tooth to be bonded. The first impression 104 of this example has a first width defined by a distance, length, etc., between a first end 408 and a second end 410, opposite the first end 408.

The second region 406 includes the partial second impression 106 of a second tooth and a partial third impression 108 of a third tooth. In some embodiments, the first impression 104 is for a second molar, the second impression 106 is for a first molar, and the third impression 108 is for a pre-molar. As shown, the second impression 106 is a partial impression that matches along a central axis of the second tooth (e.g., the groove between the lingual and buccal cusps) and the third impression 108 is a partial impression that matches the distal pit between the distal lingual and buccal cusps.

The second impression 106 of this example has a second width defined by a distance, a length, etc., between a third end 412 and a fourth end 414, opposite the third end 412. In the illustrated example, the first width is greater than the second width because a portion of the first impression 104, which is substantially an entire portion, is greater than a portion of the second impression 106, which is substantially less than an entire portion because it is a partial impression.

In some embodiments, the second region 406 forms and/or provides a handle 416 that can be held by a tool (e.g., pliers) or fingers of a clinical professional. Beneficially, in some embodiments, the second region 406 can aid positioning of the tray 400 and provide stability to the tray 400 by providing surface area contact while avoiding interference with other features of a patient's mouth and/or other appliances that may have been previously bonded.

In some embodiments, the tray 400 includes one or more recesses (not shown), such as one(s) of the recesses 134 of FIGS. 1A-1B and/or the recesses 134A, 134B of FIGS. 2A-2B, in the first region 404. In some embodiments, the tray 400 includes a perforation (not shown) between the first region 404 and the second region 406.

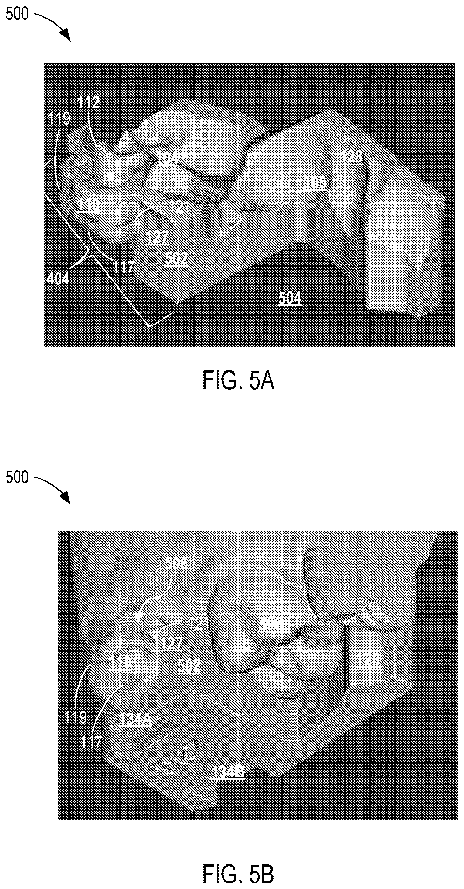

FIG. 5A depicts a perspective view of another indirect bonding tray 500 that is configured to be releasably engaged with a first tooth and supported at least in part by a second tooth. FIG. 5B depicts a bottom perspective view of the indirect bonding tray 500 releasably engaged to a first tooth.

The tray 500 of these examples include the first impression 104, a portion of the second impression 106, the first buccal wall 110, the hollow space 112 of FIGS. 1A-1B, and the second lingual wall 128 of FIGS. 1A-1B. The tray 500 includes an occlusal base 502, which includes the first region 404 of FIG. 4 and a second region 504. The first region 404 includes the first impression 104 for a first tooth 506 (depicted in FIG. 5B) to be bonded. The second region 504 of the occlusal base 502 has the second lingual wall 128 to mate with a second tooth 508 but does not have an impression region or a buccal wall (e.g., the second buccal wall 118 of FIGS. 1A-1B).

In the illustrated examples of FIGS. 5A-5B, the second lingual wall 128 can aid positioning of the tray 500 and provide stability during bonding. The tray 500 of these examples includes recesses 134A, 134B in the first region 404. Optionally, the tray 500 may include a perforation (e.g., the perforation 202 of FIGS. 2A-2B) between the first region 404 and the second region 504.

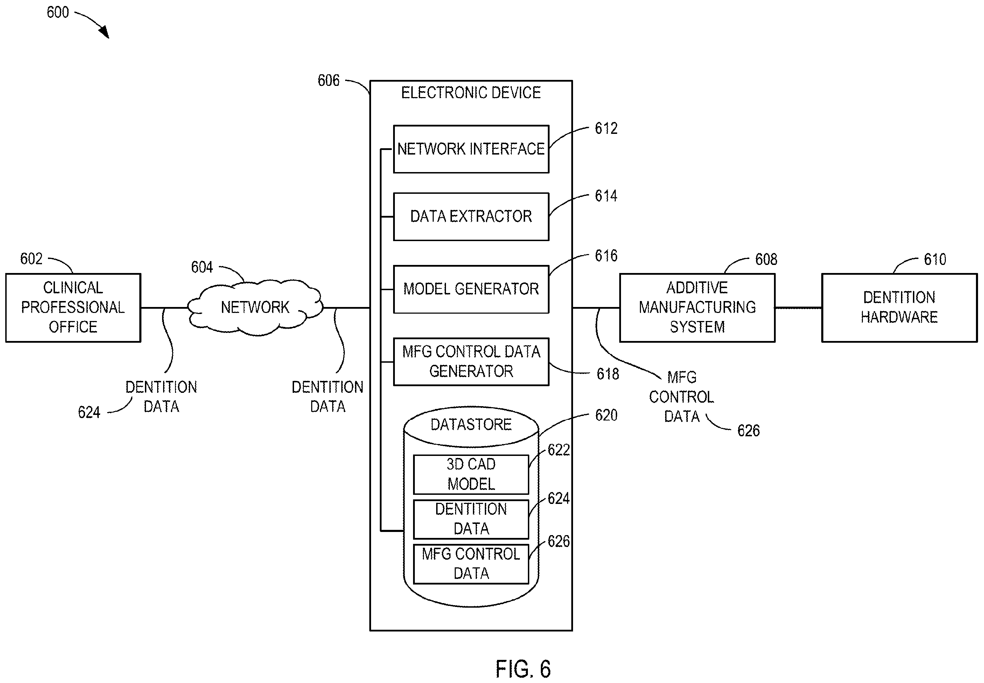

FIG. 6 shows an example dentition hardware manufacturing system 600 including an electronic device 606 and an additive manufacturing system 608 to construct example dentition hardware 610, which can include indirect bonding trays as disclosed herein. In some embodiments, the trays 100, 200, 300, 400, 500 of FIGS. 1A, 1B, 2A, 2B, 3A, 3B, 4, 5A, and/or 5B can implement the dentition hardware 610. Any other types of dentition hardware 610 are contemplated, such as brackets, tubes (e.g., molar tubes), and auxiliary appliances (e.g., buttons, hooks, and bite turbos). Further depicted in FIG. 6 are a clinical professional office 602, a network 604, and an electronic device 606. The electronic device 606 of this example includes and/or implements a network interface 612, a data extractor 614, a model generator 616, a manufacturing (MFG) control data generator 618, and a datastore 620. The datastore 620 of this example includes, stores, and/or implements a 3D computer-assisted design (CAD) model 622, dentition data 624, and manufacturing control data 626 (identified by MFG CONTROL DATA).

In some embodiments, a patient (e.g., a human patient, an adult patient, a child patient, etc.) may be evaluated at the clinical professional office 602 to facilitate a dental treatment plan, such as an orthodontic treatment plan. The patient may be missing one or more teeth. A clinical professional, such as a dentist, doctor, and/or an orthodontist, associated with the clinical professional office 602, can cause the measurement of dentition data 624 to support the construction of the dentition hardware 610 for bonding of appliance(s) to one or more teeth in a patient's oral cavity. For example, such measurement can use computerized tomography (CT) layer scanning with a non-contact 3D scanner or an intra-oral scanner directly on the patient's teeth. In some embodiments, such measurement of dentition data 624 can use 3D readings on a teeth model previously cast or 3D printed using a coordinate measuring machine, a laser scanner, or structured light digitizers. The scanning accuracy of such techniques is typically less than about 0.02 millimeters (mm). Non-limited examples of the dentition data 624 include CT data, 3D reading data, a 3D model of a patient's mouth, coordinate measurement machine data, laser scanner data, and structured light digitizer data.

In some embodiments, the clinical professional office 602 can cause transmission of the dentition data 624 to the electronic device 606 via the network 604. For example, a computer associated with the clinical professional office 602 can be used to transmit the dentition data 624 to the electronic device 606 via the network 604 using any type of data format (e.g., a compressed file, drop file, electronic mail, a flat file, etc.) and/or type(s) of network connection(s). In some embodiments, the network 604 can be implemented by any wired and/or wireless network(s) such as one or more cellular networks, one or more local area networks (LANs), one or more optical fiber networks, one or more private networks, one or more public networks, one or more wireless local area networks (WLANs), etc., and/or any combination(s) thereof. For example, the network 604 can be the Internet, but any other type of private and/or public network is contemplated.

In some embodiments, the electronic device 606 can be an electronic and/or computing system that causes manufacturing of the dentition hardware 610 based on the dentition data 624 via the additive manufacturing system 608. In some embodiments, the electronic device 606 can be associated with a designer, distributor, and/or manufacturer of the dentition hardware 610. For example, the electronic device 606 can be a server (e.g., a computer server), a desktop computer, a laptop computer, a tablet computer, a computer workstation, etc., associated with an appliance, bonding tray, and/or dentition hardware manufacturer.

The electronic device 606 includes the network interface 612 to receive and/or obtain dentition data 624 from the network 604. For example, the network interface 612 can receive teeth measurements, identification(s) and/or location(s) of existing appliance(s) in a patient's mouth, a desired torque, offset, and angulation of a bracket, occlusal and/or incisal coverage for placement guide, etc., and/or any combination(s) thereof. In some embodiments, the network interface 612 can implement a Hypertext Transfer Protocol (HTTP) interface, a secure HTTP interface (HTTPS), a Simple Mail Transfer Protocol (SMTP) interface, or any other type of interface. In some embodiments, the network interface 612 can implement an Ethernet interface, a cellular network interface, a file transfer protocol (FTP) interface, a simple file transfer protocol (SFTP) interface, and/or any other type of network protocol interface. The network interface 612 can store the dentition data 624 in the datastore 620.

The electronic device 606 includes the data extractor 614 to extract and/or identify data of interest from the dentition data 624. Additionally or alternatively to the examples of the dentition data 624 described above, non-limiting examples of information the data extractor 614 can extract includes a position and/or type of one or more teeth (e.g., an incisor, cuspid, premolar, etc., type of tooth) for placement of a tray and/or an appliance, a mesiodistal width between adjacent teeth, an occlusal-gingival height of one or more teeth for tray placement. The data extractor 614 can store the extracted data in the datastore 620.

The electronic device 606 includes the model generator 616 to construct and/or generate a model, such as a 3D CAD model, of a patient's mouth and/or teeth therein based on the dentition data 624. In some embodiments, the model generator 616 can rearrange the teeth in the model to achieve the desired treatment outcomes that can be based on the long axis of a tooth. In some embodiments, the model generator 616 can store the model in the datastore 620 as the 3D CAD model 622, or portion(s) thereof. For example, the model generator 616 can store a first 3D CAD model to be representative of a patient's mouth and/or teeth therein in the datastore 620 as the 3D CAD model 622. In some embodiments, the 3D CAD model 622 can be stored (e.g., saved) in a model file format. Non-limiting examples of a model file format include Standard Triangle Language or Standard Tessellation Language format (.stl) and additive manufacturing file (.amf) format.

In some embodiments, the model generator 616 can use the 3D CAD model 622 for creation and/or modeling of an indirect bonding tray (e.g., a custom indirect bonding tray) customized and/or tailored to a patient's mouth, which corresponds to the dentition data 624. For example, the model generator 616 can construct and/or generate a model, such as a 3D CAD model, of an indirect bonding tray based on at least one of the model of the patient's mouth or the dentition data 624. In some embodiments, the model generator 616 can store the model of the indirect bonding tray in the datastore 620 as the 3D CAD model 622, or portion(s) thereof. For example, the model generator 616 can store a second 3D CAD model to be representative of the indirect bonding tray in the datastore 620 as the 3D CAD model 622. In some embodiments, the 3D CAD model 622 can be stored (e.g., saved) in a model file format.

In some embodiments, the indirect bonding tray can be designed and/or manufactured before, during, or concurrently with design and/or manufacture of the orthodontic appliances. For example, trays can be designed to include one or more of the features described above with reference to FIGS. 1A-5. In some embodiments, trays can be manufactured using a direct manufacturing process, a subtractive manufacturing process such as milling, or by forming a cast and molding the tray over the cast. In some embodiments, trays can be formed from a flexible biocompatible material such as silicone or a polymer formed by an additive manufacturing process. For example, trays can be constructed in an additive manufacturing process using a photopolymer resin based on an acrylic ester monomer.

In some embodiments, the model of an indirect bonding tray can be a model (e.g., a computer model, a digital model, etc.) of one of the trays 100, 200, 300, 400, 500 of FIGS. 1A-5. The indirect bonding tray can be constructed based on the model to effectuate a treatment plan for a patient. For example, the model of the indirect bonding tray can be used to identify and/or select appliance(s) for insertion into the indirect bonding tray for eventual placement in the patient's mouth. For example, orthodontic appliance(s), such as bracket(s), molar tube(s), or auxiliary appliance(s) (e.g., button(s), hook(s), or bite turbo(s)) can be identified and/or selected for insertion into the indirect bonding tray.

In some embodiments, the model of the patient's mouth and the model of the indirect bonding tray can be separate models, such as being included in separate model files. In some embodiments, the model of the patient's mouth and the model of the indirect bonding tray are in the same model, such as being included in the same model file.

In some embodiments, the model(s) can be designed by the model generator 616, and/or, more generally, the electronic device 606, based on at least one of the 3D CAD model 622 of the measured teeth and/or the indirect bonding tray, the model of the desired treatment outcomes, or input additional information, such as a desired torque, offset, and angulation of select brackets and occlusal/incisal coverage for placement guide. The output of the design process can be one or more of the 3D CAD model 622, which can be designed for a single lingual/labial bracket structure, including the bracket guide and bracket pad in contact with teeth surface, as well as the slots for the ideal position according to the orthodontia requirement, tooth profile, and/or orthodontic appliance(s). In some embodiments, the indirect bonding tray can implement a bracket guide, which can be a single bracket pad for a single bracket or can be a rigid ceramic rectangular archwire with two or more occlusal supports. For example, the indirect bonding tray can be designed to assist placement of brackets via indirect bonding. In some embodiments, 3D CAD models of a bracket structure of labial or lingual brackets and/or orthodontic appliance(s) can be designed by the model generator 616, and/or, more generally, the electronic device 606, to the orthodontic requirements, material, and teeth morphology.

The electronic device 606 includes the manufacturing control data generator 618 to process the 3D CAD model 622 to generate and/or output the manufacturing control data 626 for use by the additive manufacturing system 608. For example, the manufacturing control data 626 can be commands, configuration data, instructions, etc., and/or any combination(s) thereof that cause (e.g., control, direct, instruct) the additive manufacturing system 608 to construct the dentition hardware 610.

The additive manufacturing system 608 can perform and/or carry out one or more 3D printing processes, and/or, more generally, additive manufacturing processes, to generate the dentition hardware 610. Non-limiting examples of 3D printing processes include ceramic slurry-based additive manufacturing technologies, such as digital light processing (DLP), laser photopolymerization stereolithography, jet printing (e.g., particle jetting, nano-particle jetting), layer slurry depositioning (LSD), and laser-induced slip casting. For example, where the additive manufacturing system 608 implements a ceramic slurry-based additive manufacturing system, the additive manufacturing system 608 can be used to produce orthodontic appliances, which can include bracket(s), molar tube(s), and/or auxiliary appliance(s) by slicing the 3D CAD model 622 (e.g., a 3D CAD bracket structure model) to separate it into thin layers and get the horizontal section model for each layer. Based on this section model, the additive manufacturing system 608 can directly produce the orthodontic appliance(s) ensuring the shape of each layer is consistent to the 3D CAD structure data. For example, the thickness of such layers may be about 20 micrometers or microns (µm) to about 50 µm with a manufacturing accuracy of about 5 µm to about 10 µm by using between-layer additive error compensation. In some embodiments, the additive manufacturing system 608 can be and/or implement a polymer based additive manufacturing system, and the polymer orthodontic appliance(s) can be formed accordingly. In some such embodiments, post processing can involve cleaning, drying, and curing.

In some embodiments, the additive manufacturing system 608 performs post-processing of the dentition hardware 610. Non-limiting examples of post-processing operations include cleaning, a thermal treatment (for binder burnout), and a sintering process to achieve optimal or improved ceramic density. For example, a green body can be removed from a device (e.g., a build box) of the additive manufacturing system 608, exposed to a furnace to decompose the polymerized binder (a process referred to as debinding), and sintered to form a ceramic bracket, molar tube, and/or auxiliary appliance. In some embodiments, the green body is an orthodontic appliance as disclosed herein.

The additive manufacturing system 608 can develop the dentition hardware 610 using high strength oxides, nitrides and carbides ceramics, and/or metals. For example, the additive manufacturing system 608 can 3D print the dentition hardware 610 using high strength oxides, nitrides and carbides ceramics, and/or metals. Non-limiting examples of such materials include Aluminum Oxide (Al2O3), Zirconium Oxide (ZrO2), Alumina-toughened Zirconia (ATZ), Zirconia-toughened alumina (ZTA), Lithium disilicate, Leucite silicate and Silicon Nitride, Stainless Steel 17-4PH or 316L, Titanium (Ti/Ti-Al6-V4), Cobalt Chromium (CoCr), Tungsten and Tungsten Carbide/Cobalt (W or WC/Co), Silicon Carbide (SiC), Molybdenum (Mo) and precious metals (e.g., gold (Au)).

In some embodiments, the additive manufacturing system 608 can prepare a light-polymerizable material or photo-reactive suspension (slurry) based on commercially available di- and mono-functional methacrylates. For example, the additive manufacturing system 608 can prepare a slurry used to 3D print a ceramic appliance using di- and mono-functional methacrylates. A non-limiting example of a light-polymerizable material or photo-reactive suspension is a slurry blend of about 0.01-0.025 % by weight (wt%) of a highly reactive photoinitiator, about 0.05-6wt% of a dispersant, an absorber, and about 2-20wt% of a non-reactive diluent. For example, photoinitiators, methacrylates, and dispersants can be burned up and/or disintegrated during 3D printing and/or a subsequent curing process to leave the ceramic appliance behind and intact. In some embodiments, a solid loading of a high strength oxide ceramic such as Aluminum Oxide (Al2O3) and Zirconium Oxide (ZrO2) powder can be used, but other ceramic materials and metals can be used.

In some embodiments, the loading of alumina or zirconia in the slurry (e.g., the ceramic slurry) can be greater than or about 49wt%, 50wt%, 55wt%, 60wt%, 65wt%, 70wt%, 75wt%, 80wt%, 85wt%, 90wt%, 95wt%, or 99wt%. In some embodiments, the loading of alumina or zirconia in the slurry can be between 50-60wt%, 60-70wt%, 70-80wt%, 80-90wt%, 90-95wt%, 95-100wt%. In some embodiments, the purity of the sintered alumina or zirconia can be greater than or about 95wt%, 95.5wt%. 96wt%. 96.5wt%, 97wt%, 97.5wt%, 98wt%, 98.5wt%, 99wt%, 99.1wt%, 99.2wt%, 99.3wt%, 99.4wt%, 99.5wt%, 99.6wt%, 99.7wt%, 99.8wt% or 99.9wt%. In some embodiments, the reduction in part size from green body to sintered part can be about 5%, 10%, 15%, 20%, 25%, 30%, 35%, 40%, 45% or 50%.

The acrylate moiety can be a monomer, oligomer, or polymer. The acrylate moiety can include more than one methacrylate moiety. The weight content of the acrylate moiety can be between 5wt% and 50wt%. In some embodiments, the weight content is greater than or about 5, 10, 15, 20, 25, 30, 35, 40, or 45wt%. The acrylate moiety can be a methacrylate moiety or an acrylate ester. For example, the additive manufacturing system 608 can construct an indirect bonding tray, such as one(s) of the trays 100, 200, 300, 400, 500 of FIGS. 1A-5, using a photopolymer resin based on an acrylic ester monomer.

In some embodiments, the model generator 616 can generate the 3D CAD model 622 to include model(s) of the dentition hardware 610, which can include one(s) of the trays 100, 200, 300, 400, 500 and/or associated appliance(s). The manufacturing control data generator 618 can generate, based on the 3D CAD model 622, the manufacturing control data 626 to instruct the additive manufacturing system 608 to construct at least one of the trays 100, 200, 300, 400, 500 as a single body. Alternatively, the manufacturing control data 626 may cause the additive manufacturing system 608 to construct at least one of the trays 100, 200, 300, 400, 500 as separate bodies. In some embodiments, the manufacturing control data generator 618 can generate, based on the 3D CAD model 622, the manufacturing control data 626 to instruct the additive manufacturing system 608 to construct orthodontic appliance(s) associated with one(s) of the trays 100, 200, 300, 400, 500 as single bodies. Alternatively, the manufacturing control data 626 may cause the additive manufacturing system 608 to construct orthodontic appliance(s) associated with one(s) of the trays 100, 200, 300, 400, 500 as separate bodies.

The electronic device 606 includes the datastore 620 to record data. Non-limiting examples of recorded data include the dentition data 624, the 3D CAD model 622, and the manufacturing control data 626. In some embodiments, the datastore 620 can be implemented by any technology for storing data. For example, the datastore 620 can be implemented by a volatile memory (e.g., a Synchronous Dynamic Random Access Memory (SDRAM), a Dynamic Random Access Memory (DRAM), a RAMBUS Dynamic Random Access Memory (RDRAM), etc.) and/or a non-volatile memory (e.g., flash memory). The datastore 620 may additionally or alternatively be implemented by one or more double data rate (DDR) memories, such as DDR, DDR2, DDR3, DDR4, mobile DDR (mDDR), etc. The datastore 620 may additionally or alternatively be implemented by one or more mass storage devices such as hard disk drive(s) (HDD(s)), compact disk (CD) drive(s), digital versatile disk (DVD) drive(s), solid-state disk (SSD) drive(s), etc. While in the illustrated example the datastore 620 is illustrated as a single datastore, the datastore 620 may be implemented by any number and/or type(s) of datastores. Furthermore, the data stored in the datastore 620 may be in any data format. Non-limiting examples of data formats include a CAD model (e.g., a 3D CAD model), a flat file, binary data, comma delimited data, tab delimited data, and structured query language (SQL) structures.

While an example implementation of the electronic device 606, and/or, more generally, the dentition hardware manufacturing system 600, is depicted in FIG. 6, other implementations are contemplated. For example, one or more blocks, components, functions, etc., of the electronic device 606 and/or the dentition hardware manufacturing system 600 may be combined or divided in any other way. The electronic device 606 of the illustrated example may be implemented by hardware alone, or by a combination of hardware, software, and/or firmware. For example, the electronic device 606 may be implemented by one or more analog or digital circuits (e.g., comparators, operational amplifiers, etc.), one or more hardware-implemented state machines, one or more programmable processors (e.g., central processing units (CPUs), digital signal processors (DSPs), field programmable gate arrays (FPGAs), etc.), one or more network interfaces (e.g., network interface circuitry, network interface cards (NICs), smart NICs, etc.), one or more ASICs, one or more memories (e.g., non-volatile memory, volatile memory, etc.), one or more mass storage disks or devices (e.g., hard-disk drives (HDDs), solid-state disk (SSD) drives, etc.), etc., and/or any combination(s) thereof.

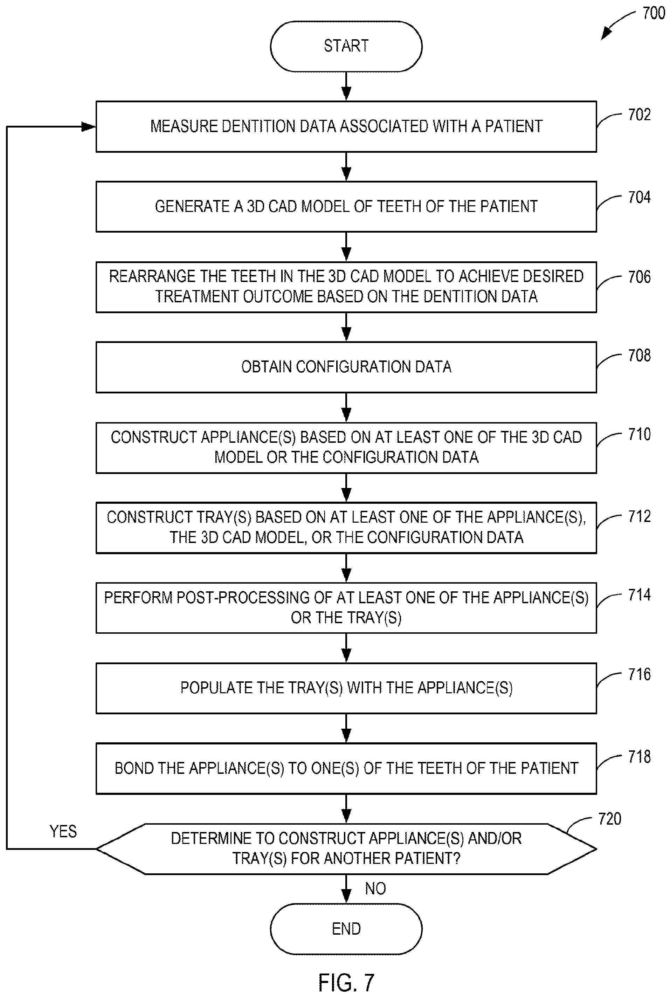

FIG. 7 is a flowchart 700 representative of machine-readable instructions that may be executed by processor circuitry to implement an electronic device, such as the electronic device 606 of FIG. 6, and/or, more generally, an appliance manufacturing system, such as the dentition hardware manufacturing system 600 of FIG. 6. Additionally or alternatively, one or more blocks of the flowchart 700 of FIG. 7 may be representative of state(s) of one or more hardware-implemented state machines, algorithm(s) that may be implemented by hardware alone such as an ASIC, etc., and/or any combination(s) thereof.

The flowchart 700 of FIG. 7 begins at block 702 at which the dentition hardware manufacturing system 600 measures dentition data associated with a patient. For example, a clinical professional associated with the clinical professional office 602 of FIG. 6 can measure and/or generate the dentition data 624. In some embodiments, the clinical professional can generate the dentition data 624 via CT layer scanning, 3D readings on a teeth model previously cast or 3D printed using a coordinate measuring machine, a laser scanner, or structured light digitizers. In some embodiments, the dentition data 624 can be transmitted to the electronic device 606 via the network 604.

At block 704, the dentition hardware manufacturing system 600 generates a 3D CAD model of teeth of the patient. For example, after the network interface 612 receives the dentition data 624 via the network 604, the data extractor 614 can extract and/or identify data of interest for use in creating the 3D CAD model 622. In some embodiments, the model generator 616 can generate the 3D CAD model 622 based on the extracted data from the dentition data 624. In some embodiments, the 3D CAD model 622 can be a digital representation of a patient's mouth and/or teeth therein. Additionally or alternatively, the 3D CAD model 622 can be a digital representation of an indirect bonding tray, such as one(s) of the trays 100, 200, 300, 400, 500 of FIGS. 1A-5, for placement in the patient's mouth.

At block 706, the dentition hardware manufacturing system 600 rearranges the teeth in the 3D CAD model to achieve desired treatment outcome based on the dentition data. For example, the model generator 616 can rearrange and/or otherwise move one(s) of the teeth in the digital representation of the patient's mouth to achieve the desired treatment outcomes that may be based on the long axis of a tooth of the patient.

At block 708, the dentition hardware manufacturing system 600 obtains configuration data. For example, the model generator 616 can obtain, such as from the dentition data 624 and/or from a user of the electronic device 606 via a user interface associated with the electronic device 606, configuration data. Non-limiting examples of configuration data include a desired and/or specified torque, offset, and angulation of select brackets and occlusal/incisal coverage for placement guide. Additional non-limiting examples of configuration data include information regarding a type of tooth (e.g., incisor, cuspid, premolar, etc.) for appliance bonding, a location of the tooth, a mesiodistal width between adjacent teeth, and an occlusal-gingival height of one or more teeth.

At block 710, the dentition hardware manufacturing system 600 constructs appliance(s) based on at least one of the 3D CAD model or the configuration data. For example, the manufacturing control data generator 618 can generate and/or output the manufacturing control data 626 to the additive manufacturing system 608. In some embodiments, the manufacturing control data 626 can cause the additive manufacturing system 608 to produce the dentition hardware 610, which can include one or more appliances using additive manufacturing techniques as disclosed herein. For example, the additive manufacturing system 608 can separate the 3D CAD model 622, based on the manufacturing control data 626, into thin layers and obtain the horizontal section model for each layer. Based on this section model, the additive manufacturing system 608 can produce one or more appliances, which can include bracket(s), tube(s), and/or auxiliary appliance(s), ensuring the shape of each layer is consistent to the structured data of the 3D CAD model 622.

At block 712, the dentition hardware manufacturing system 600 constructs tray(s) based on at least one of the appliance(s), the 3D CAD model, or the configuration data. For example, an indirect bonding tray can be designed and/or manufactured before, during, or concurrently with design and/or manufacture of the orthodontic appliance(s). In some embodiments, the tray(s) can be configured to accommodate and/or releasably engage appliance(s), which can be represented in the 3D CAD model 622 or a different 3D CAD model. In some embodiments, the tray(s) can be configured based on the configuration data. In some embodiments, the tray(s) can be designed to include one or more of the features described above with reference to FIGS. 1A-5. In some embodiments, the tray(s) can be manufactured using a direct manufacturing process, a subtractive manufacturing process such as milling, or by forming a cast and molding the tray over the cast. In some embodiments, the tray(s) can be formed from a flexible biocompatible material such as silicone or a polymer formed by an additive manufacturing process, which can be implemented by the additive manufacturing system 608. For example, the tray(s) can be constructed in an additive manufacturing process using a photopolymer resin based on an acrylic ester monomer.

At block 714, the dentition hardware manufacturing system 600 performs post-processing of at least one of the appliance(s) or the tray(s). For example, the additive manufacturing system 608 can perform post-processing of at least one of the trays 100, 200, 300, 400, 500 of FIGS. 1A-5 or associated appliance(s). In some embodiments, the additive manufacturing system 608 can carry out cleaning, a thermal treatment (for binder burnout), and/or a sintering process to achieve optimal and/or otherwise improved ceramic density (in the example of the additive manufacturing system 608 implementing a ceramic slurry-based additive manufacturing system). Alternatively, post processing may include cleaning, drying, and curing in the example of the additive manufacturing system 608 implementing a polymer-based additive manufacturing system.

At block 716, the dentition hardware manufacturing system 600 populates the tray(s) with the appliance(s). For example, a user (e.g., a human user or a robot user such as a collaborative robot or autonomous robot) can populate the hollow space 112 of the tray 100 of FIGS. 1A-1B with the corresponding appliance. In some embodiments, a clinical professional at the clinical professional office 602 populates the hollow space 112 with the corresponding appliance.

At block 718, the dentition hardware manufacturing system 600 bonds the appliance(s) to one(s) of the teeth of the patient. For example, a user, such as a clinical professional at the clinical professional office 602, can place the tray 100 into a patient's mouth. The clinical professional can bond the appliance to one of the patient's teeth. The clinical professional can subsequently remove the tray 100 after the bonding is complete.

At block 720, the dentition hardware manufacturing system 600 determines whether to construct appliance(s) and/or tray(s) for another patient. For example, the electronic device 606 can determine that additional appliance(s) and/or tray(s) is/are to be constructed based on dentition data being received by the network interface 612 for a different patient. If, at block 720, the dentition hardware manufacturing system 600 determines to construct appliance(s) and/or tray(s) for another patient, control returns to block 702. Otherwise, the example flowchart 700 of the illustrated example of FIG. 7 concludes.

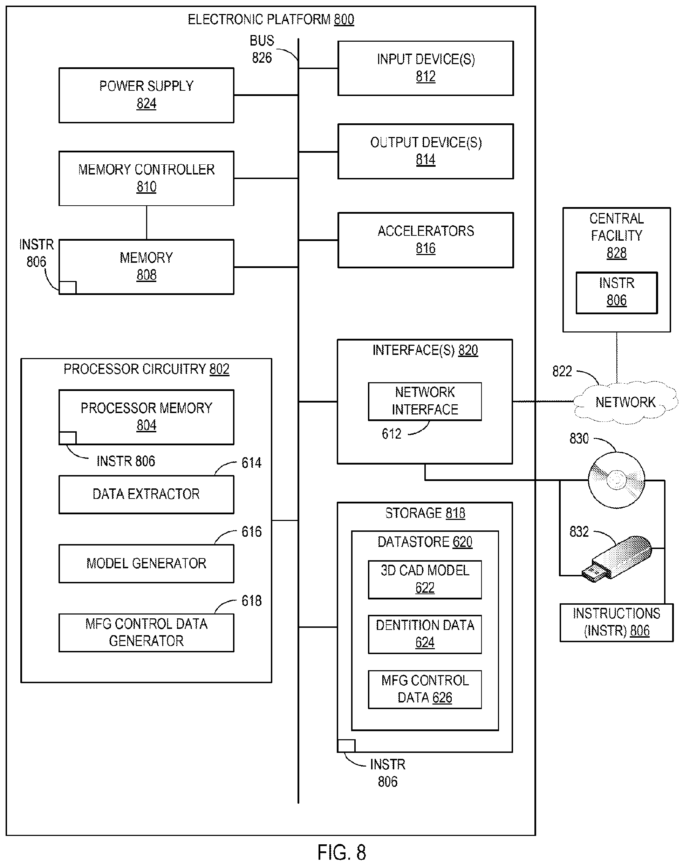

FIG. 8 is an example implementation of an electronic platform 800 structured to execute the machine-readable instructions represented by the flowchart 700 of FIG. 7 to implement an electronic device, such as the electronic device 606 of FIG. 6. It should be appreciated that FIG. 8 is intended neither to be a description of necessary components for an electronic and/or computing device to operate as the electronic device 606, in accordance with the techniques described herein, nor a comprehensive depiction. The electronic platform 800 of this example can be an electronic device, such as a desktop computer, a laptop computer, a server (e.g., a computer server, a blade server, a rack-mounted server, etc.), a tablet computer, a computer workstation, or any other type of computing and/or electronic device.

The electronic platform 800 of the illustrated example includes processor circuitry 802, which can be implemented by one or more programmable processors, one or more hardware-implemented state machines, one or more ASICs, etc., and/or any combination(s) thereof. For example, the one or more programmable processors can include one or more CPUs, one or more DSPs, one or more FPGAs, etc., and/or any combination(s) thereof. The processor circuitry 802 includes processor memory 804, which can be volatile memory, such as random-access memory (RAM) of any type. The processor circuitry 802 of this example implements the data extractor 614, the model generator 616, and the manufacturing control data generator 618 of FIG. 6.

The processor circuitry 802 can execute machine-readable instructions 806 (identified by INSTRUCTIONS), which are stored in the processor memory 804, to implement at least one of the data extractor 614, the model generator 616, or the manufacturing control data generator 618 of FIG. 6. The machine-readable instructions 806 can include data representative of computer-executable and/or machine-executable instructions implementing techniques that operate according to the techniques described herein. For example, the machine-readable instructions 806 can include data (e.g., code, embedded software (e.g., firmware), software, etc.) representative of the flowchart 700 of FIG. 7, or portion(s) thereof.

The electronic platform 800 includes memory 808, which can include the machine-readable instructions 806. The memory 808 of this example can be controlled by a memory controller 810. For example, the memory controller 810 can control reads, writes, and/or, more generally, access(es) to the memory 808 by other component(s) of the electronic platform 800. The memory 808 of this example can be implemented by volatile memory, non-volatile memory, etc., and/or any combination(s) thereof. For example, the volatile memory can include static random-access memory (SRAM), dynamic random-access memory (DRAM), cache memory (e.g., Level 1 (L1) cache memory, Level 2 (L2) cache memory, Level 3 (L3) cache memory, etc.), etc., and/or any combination(s) thereof. In some examples, the non-volatile memory can include flash memory, electrically erasable programmable read-only memory (EEPROM), magnetoresistive random-access memory (MRAM), ferroelectric random-access memory (FeRAM, F-RAM, or FRAM), etc., and/or any combination(s) thereof.

The electronic platform 800 includes input device(s) 812 to enable data and/or commands to be entered into the processor circuitry 802. For example, the input device(s) 812 can include an audio sensor, a camera (e.g., a still camera, a video camera, etc.), a keyboard, a microphone, a mouse, a touchscreen, a voice recognition system, etc., and/or any combination(s) thereof.

The electronic platform 800 includes output device(s) 814 to convey, display, and/or present information to a user (e.g., a human user, a machine user, etc.). For example, the output device(s) 814 can include one or more display devices, speakers, etc. The one or more display devices can include an augmented reality (AR) and/or virtual reality (VR) display, a liquid crystal display (LCD), a light-emitting diode (LED) display, an organic light-emitting diode (OLED) display, a quantum dot (QLED) display, a thin-film transistor (TFT) LCD, a touchscreen, etc., and/or any combination(s) thereof. The output device(s) 814 can be used, among other things, to generate, launch, and/or present a user interface. For example, the user interface can be generated and/or implemented by the output device(s) 814 for visual presentation of output and speakers or other sound generating devices for audible presentation of output.

The electronic platform 800 includes accelerators 816, which are hardware devices to which the processor circuitry 802 can offload compute tasks to accelerate their processing. For example, the accelerators 816 can include artificial intelligence/machine-learning (AI/ML) processors, ASICs, FPGAs, graphics processing units (GPUs), neural network (NN) processors, systems-on-chip (SoCs), vision processing units (VPUs), etc., and/or any combination(s) thereof. In some embodiments, one or more of the data extractor 614, the model generator 616, and/or the manufacturing control data generator 618 can be implemented by one(s) of the accelerators 816 instead of the processor circuitry 802. In some embodiments, the data extractor 614, the model generator 616, and/or the manufacturing control data generator 618 can be executed concurrently (e.g., in parallel, substantially in parallel, etc.) by the processor circuitry 802 and the accelerators 816. For example, the processor circuitry 802 and one(s) of the accelerators 816 can execute in parallel function(s) corresponding to the model generator 616.

The electronic platform 800 includes storage 818 to record and/or control access to data, such as the machine-readable instructions 806. In this example, the storage 818 can implement the datastore 620, the 3D CAD model 622, the dentition data 624, and the manufacturing control data 626. The storage 818 can be implemented by one or more mass storage disks or devices, such as HDDs, SSDs, etc., and/or any combination(s) thereof.

The electronic platform 800 includes interface(s) 820 to effectuate exchange of data with external devices (e.g., computing and/or electronic devices of any kind) via a network 822. In some embodiments, the network 822 can be implemented by the network 604 of FIG. 6. In this example, the interface(s) 820 can implement the network interface 612 of FIG. 6. In some embodiments, the interface(s) 820 can be used to communicate with an additive manufacturing system, such as the additive manufacturing system 608 of FIG. 6. For example, the interface(s) 820 can implement one or more interfaces to transmit data to and/or receive data from the additive manufacturing system 608.

The interface(s) 820 of the illustrated example can be implemented by an interface device, such as network interface circuitry (e.g., a NIC, a smart NIC, etc.), a gateway, a router, a switch, etc., and/or any combination(s) thereof. The interface(s) 820 can implement any type of communication interface, such as BLUETOOTH^{®}, a cellular telephone system (e.g., a 4G LTE interface, a 5G interface, a 6G interface, etc.), an Ethernet interface, a near-field communication (NFC) interface, an optical disc interface (e.g., a Blu-ray disc drive, a Compact Disk (CD) drive, a Digital Versatile Disk (DVD) drive, etc.), an optical fiber interface, a satellite interface (e.g., a beyond-line-of-site (BLOS) satellite interface, a line-of-site (LOS) satellite interface, etc.), a Universal Serial Bus (USB) interface (e.g., USB Type-A, USB Type-B, USB TYPE-C^{™} or USB-C^{™}, etc.), etc., and/or any combination(s) thereof.

The electronic platform 800 includes a power supply 824 to store energy and provide power to components of the electronic platform 800. The power supply 824 can be implemented by a power converter, such as an alternating current-to-direct-current (AC/DC) power converter, a direct current-to-direct current (DC/DC) power converter, etc., and/or any combination(s) thereof. For example, the power supply 824 can be powered by an external power source, such as an alternating current (AC) power source (e.g., an electrical grid), a direct current (DC) power source (e.g., a battery, a battery backup system, etc.), etc., and the power supply 824 can convert the AC input or the DC input into a suitable voltage for use by the electronic platform 800. In some embodiments, the power supply 824 can be a limited duration power source, such as a battery (e.g., a rechargeable battery such as a lithium-ion battery).

Component(s) of the electronic platform 800 can be in communication with one(s) of each other via a bus 826. For example, the bus 826 can be any type of computing and/or electrical bus, such as an I2C bus, a PCI bus, a PCIe bus, a SPI bus, and/or the like.

The network 822 can be implemented by any wired and/or wireless network(s) such as one or more cellular networks (e.g., 4G LTE cellular networks, 5G cellular networks, 6G cellular networks, etc.), one or more data buses, one or more LANs, one or more optical fiber networks, one or more private networks, one or more public networks, one or more WLANs, etc., and/or any combination(s) thereof. For example, the network 822 can be the Internet, but any other type of private and/or public network is contemplated.

The network 822 of the illustrated example facilitates communication between the interface(s) 820 and a central facility 828. The central facility 828 in this example can be an entity associated with one or more servers, such as one or more physical hardware servers and/or virtualizations of the one or more physical hardware servers. For example, the central facility 828 can be implemented by a public cloud provider, a private cloud provider, etc., and/or any combination(s) thereof. In this example, the central facility 828 can compile, generate, update, etc., the machine-readable instructions 806 and store the machine-readable instructions 806 for access (e.g., download) via the network 822. For example, the electronic platform 800 can transmit a request, via the interface(s) 820, to the central facility 828 for the machine-readable instructions 806 and receive the machine-readable instructions 806 from the central facility 828 via the network 822 in response to the request.

Additionally or alternatively, the interface(s) 820 can receive the machine-readable instructions 806 via non-transitory machine-readable storage media, such as an optical disc 830 (e.g., a Blu-ray disc, a CD, a DVD, etc.) or any other type of removable non-transitory machine-readable storage media such as a USB drive 832. For example, the optical disc 830 and/or the USB drive 832 can store the machine-readable instructions 806 thereon and provide the machine-readable instructions 806 to the electronic platform 800 via the interface(s) 820.

Techniques operating according to the principles described herein may be implemented in any suitable manner. The processing and decision blocks of the flowcharts above represent steps and acts that may be included in algorithms that carry out these various processes. Algorithms derived from these processes may be implemented as software integrated with and directing the operation of one or more single- or multi-purpose processors, may be implemented as functionally equivalent circuits such as a DSP circuit or an ASIC, or may be implemented in any other suitable manner. It should be appreciated that the flowcharts included herein do not depict the syntax or operation of any particular circuit or of any particular programming language or type of programming language. Rather, the flowcharts illustrate the functional information one skilled in the art may use to fabricate circuits or to implement computer software algorithms to perform the processing of a particular apparatus carrying out the types of techniques described herein. For example, the flowcharts, or portion(s) thereof, may be implemented by hardware alone (e.g., one or more analog or digital circuits, one or more hardware-implemented state machines, etc., and/or any combination(s) thereof) that is configured or structured to carry out the various processes of the flowcharts. In some examples, the flowcharts, or portion(s) thereof, may be implemented by machine-executable instructions (e.g., machine-readable instructions, computer-readable instructions, computer-executable instructions, etc.) that, when executed by one or more single- or multi-purpose processors, carry out the various processes of the flowcharts. It should also be appreciated that, unless otherwise indicated herein, the particular sequence of steps and/or acts described in each flowchart is merely illustrative of the algorithms that may be implemented and can be varied in implementations and embodiments of the principles described herein.

Accordingly, in some embodiments, the techniques described herein may be embodied in machine-executable instructions implemented as software, including as application software, system software, firmware, middleware, embedded code, or any other suitable type of computer code. Such machine-executable instructions may be generated, written, etc., using any of a number of suitable programming languages and/or programming or scripting tools, and also may be compiled as executable machine language code or intermediate code that is executed on a framework, virtual machine, or container.

When techniques described herein are embodied as machine-executable instructions, these machine-executable instructions may be implemented in any suitable manner, including as a number of functional facilities, each providing one or more operations to complete execution of algorithms operating according to these techniques. A "functional facility," however instantiated, is a structural component of a computer system that, when integrated with and executed by one or more computers, causes the one or more computers to perform a specific operational role. A functional facility may be a portion of or an entire software element. For example, a functional facility may be implemented as a function of a process, or as a discrete process, or as any other suitable unit of processing. If techniques described herein are implemented as multiple functional facilities, each functional facility may be implemented in its own way; all need not be implemented the same way. Additionally, these functional facilities may be executed in parallel and/or serially, as appropriate, and may pass information between one another using a shared memory on the computer(s) on which they are executing, using a message passing protocol, or in any other suitable way.

Generally, functional facilities include routines, programs, objects, components, data structures, etc., that perform particular tasks or implement particular abstract data types. Typically, the functionality of the functional facilities may be combined or distributed as desired in the systems in which they operate. In some implementations, one or more functional facilities carrying out techniques herein may together form a complete software package. These functional facilities may, in alternative embodiments, be adapted to interact with other, unrelated functional facilities and/or processes, to implement a software program application.

Some exemplary functional facilities have been described herein for carrying out one or more tasks. It should be appreciated, though, that the functional facilities and division of tasks described is merely illustrative of the type of functional facilities that may implement using the exemplary techniques described herein, and that embodiments are not limited to being implemented in any specific number, division, or type of functional facilities. In some implementations, all functionalities may be implemented in a single functional facility. It should also be appreciated that, in some implementations, some of the functional facilities described herein may be implemented together with or separately from others (e.g., as a single unit or separate units), or some of these functional facilities may not be implemented.

Machine-executable instructions implementing the techniques described herein (when implemented as one or more functional facilities or in any other manner) may, in some embodiments, be encoded on one or more computer-readable media, machine-readable media, etc., to provide functionality to the media. Computer-readable media include magnetic media such as a hard disk drive, optical media such as a CD or a DVD, a persistent or non-persistent solid-state memory (e.g., Flash memory, Magnetic RAM, etc.), or any other suitable storage media. Such a computer-readable medium may be implemented in any suitable manner. As used herein, the terms "computer-readable media" (also called "computer-readable storage media") and "machine-readable media" (also called "machine-readable storage media") refer to tangible storage media. Tangible storage media are non-transitory and have at least one physical, structural component. In a "computer-readable medium" and "machine-readable medium" as used herein, at least one physical, structural component has at least one physical property that may be altered in some way during a process of creating the medium with embedded information, a process of recording information thereon, or any other process of encoding the medium with information. For example, a magnetization state of a portion of a physical structure of a computer-readable medium, a machine-readable medium, etc., may be altered during a recording process.

Further, some techniques described above comprise acts of storing information (e.g., data and/or instructions) in certain ways for use by these techniques. In some implementations of these techniques-such as implementations where the techniques are implemented as machine-executable instructions-the information may be encoded on a computer-readable storage media. Where specific structures are described herein as advantageous formats in which to store this information, these structures may be used to impart a physical organization of the information when encoded on the storage medium. These advantageous structures may then provide functionality to the storage medium by affecting operations of one or more processors interacting with the information; for example, by increasing the efficiency of computer operations performed by the processor(s).

In some, but not all, implementations in which the techniques may be embodied as machine-executable instructions, these instructions may be executed on one or more suitable computing device(s) and/or electronic device(s) operating in any suitable computer and/or electronic system, or one or more computing devices (or one or more processors of one or more computing devices) and/or one or more electronic devices (or one or more processors of one or more electronic devices) may be programmed to execute the machine-executable instructions. A computing device, electronic device, or processor (e.g., processor circuitry) may be programmed to execute instructions when the instructions are stored in a manner accessible to the computing device, electronic device, or processor, such as in a data store (e.g., an on-chip cache or instruction register, a computer-readable storage medium and/or a machine-readable storage medium accessible via a bus, a computer-readable storage medium and/or a machine-readable storage medium accessible via one or more networks and accessible by the device/processor, etc.). Functional facilities comprising these machine-executable instructions may be integrated with and direct the operation of a single multi-purpose programmable digital computing device, a coordinated system of two or more multi-purpose computing device sharing processing power and jointly carrying out the techniques described herein, a single computing device or coordinated system of computing device (co-located or geographically distributed) dedicated to executing the techniques described herein, one or more FPGAs for carrying out the techniques described herein, or any other suitable system.

Embodiments have been described where the techniques are implemented in circuitry and/or machine-executable instructions. It should be appreciated that some embodiments may be in the form of a method, of which at least one example has been provided. The acts performed as part of the method may be ordered in any suitable way. Accordingly, embodiments may be constructed in which acts are performed in an order different than illustrated, which may include performing some acts simultaneously, even though shown as sequential acts in illustrative embodiments.

Various aspects of the embodiments described above may be used alone, in combination, or in a variety of arrangements not specifically discussed in the embodiments described in the foregoing and is therefore not limited in its application to the details and arrangement of components set forth in the foregoing description or illustrated in the drawings. For example, aspects described in one embodiment may be combined in any manner with aspects described in other embodiments.

The phrase "and/or," as used herein in the specification and in the claims, should be understood to mean "either or both," of the elements so conjoined, e.g., elements that are conjunctively present in some cases and disjunctively present in other cases. Multiple elements listed with "and/or" should be construed in the same fashion, e.g., "one or more" of the elements so conjoined. Other elements may optionally be present other than the elements specifically identified by the "and/or" clause, whether related or unrelated to those elements specifically identified. Thus, as a non-limiting example, a reference to "A and/or B," when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

The indefinite articles "a" and "an," as used herein in the specification and in the claims, unless clearly indicated to the contrary, should be understood to mean "at least one."

As used herein in the specification and in the claims, the phrase, "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently, "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, ,and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Also, the phraseology and terminology used herein is for the purpose of description and should not be regarded as limiting. The use of "including," "comprising," "having," "containing," "involving," and variations thereof herein, is meant to encompass the items listed thereafter and equivalents thereof as well as additional items.

All definitions, as defined and used herein, should be understood to control over dictionary definitions, definitions in referenced documents, and/or ordinary meanings of the defined terms.

The word "exemplary" is used herein to mean serving as an example, instance, or illustration. Any embodiment, implementation, process, feature, etc., described herein as exemplary should therefore be understood to be an illustrative example and should not be understood to be a preferred or advantageous example unless otherwise indicated.

Having thus described several aspects of at least one embodiment, it is to be appreciated that various alterations, modifications, and improvements will readily occur to those skilled in the art. Such alterations, modifications, and improvements are intended to be part of this disclosure and are intended to be within the scope of the appended claims. Accordingly, the foregoing description and drawings are by way of example only.

## Claims

1. An indirect bonding tray (200) for transferring an orthodontic appliance to a tooth, the indirect bonding tray (200) comprising:
an occlusal base (204) having an outer perimeter and defining a first impression (104) conforming to a first occlusal tooth surface and a second impression (106) conforming to at least a portion of a second occlusal tooth surface;
a buccal wall (110) defining a well (112) to releasably engage the orthodontic appliance, the buccal wall (110) extending outwards beyond the outer perimeter of the occlusal base (204), wherein:
the buccal wall (110) and the well (112) are in a first region (114) of the indirect bonding tray (200) associated with the first impression (104);
the first region (114) is adjacent to a second region (122) of the indirect bonding tray (200) associated with the second impression (106); and
an outer wall of the second region (122) extends to the outer perimeter of the occlusal base (204); and
a perforation (202) defined in the second region (122) and including a portion of the second impression (106), the perforation (202) configured to allow the second region (122) to be removed from the first region (114) while leaving the first impression (104) substantially fully intact after the second region (122) is removed.

2. The indirect bonding tray (200) of claim 1, wherein at least a portion of the well (112) extends above a top surface of the second region (122), beyond the outer perimeter of the occlusal base (204), or both.

3. The indirect bonding tray (200) of claim 1, wherein at least one of a base of the well (112) or one or more sides of the well (112) are offset at an angle relative to a top surface of the second region (122).

4. The indirect bonding tray (200) of claim 1, wherein the orthodontic appliance is a first orthodontic appliance, and the second region (122) is not configured to releasably engage a second orthodontic appliance.

5. The indirect bonding tray (200) of claim 1, further comprising a lingual wall (126) configured to cover at least a portion of the tooth, the lingual wall opposite the buccal wall (110).

6. The indirect bonding tray (200) of claim 1, wherein the tooth is a first tooth, the buccal wall (110) is a first buccal wall (110), and further comprising a second buccal wall (110) configured to cover at least a portion of a second tooth, the second tooth to be adjacent to the first tooth.

7. The indirect bonding tray (200) of claim 1, wherein the tooth is a first tooth, and further comprising a lingual wall (126) configured to cover at least a portion of a lingual surface of a second tooth, the second tooth to be adjacent to the first tooth.

8. The indirect bonding tray (200) of claim 1, wherein the tooth is a first tooth and the second impression (106) conforms to a portion of a third occlusal tooth surface of a second tooth, the second tooth to be adjacent to the first tooth.

9. The indirect bonding tray (200) of claim 1, wherein the first impression (104) and the second impression (106) are on a first surface of the occlusal base (204), and further comprising at least one recess defined in a second surface of the occlusal base (204), the second surface opposite the first surface.

10. The indirect bonding tray (200) of claim 1, wherein the tooth is a molar.

11. The indirect bonding tray (200) of claim 1, wherein the tooth is a second molar, and the second impression (106) is configured to releasably engage with a first molar.

12. The indirect bonding tray (200) of claim 1, wherein the first impression (104) is distal of the second impression (106).

13. The indirect bonding tray (200) of claim 1, wherein the first impression (104) is mesial of the second impression (106).

14. The indirect bonding tray (200) of claim 1, wherein the orthodontic appliance is a molar tube.

15. The indirect bonding tray (200) of claim 1, wherein the orthodontic appliance is an orthodontic bracket.

16. The indirect bonding tray (200) of claim 1, wherein the orthodontic appliance is an auxiliary appliance.

17. The indirect bonding tray (200) of claim 16, wherein the auxiliary appliance is a bite turbo, a button, or a hook.

18. The indirect bonding tray (200) of claim 1, wherein the well (112) conforms to an outer surface of a molar tube buccal surface of the tooth.

19. The indirect bonding tray (200) of claim 1, wherein the tooth is a first tooth, the second impression (106) is associated with a second tooth, and the occlusal base (204) defines a third impression conforming to at least a portion of an occlusal surface of a third tooth.

20. The indirect bonding tray (200) of claim 19, wherein the third impression is adjacent to the first impression (104).

21. The indirect bonding tray (200) of claim 1, wherein the occlusal base (204) is tapered under the second impression (106).

22. An apparatus for constructing an indirect bonding tray (200) for transferring an orthodontic appliance to a tooth, the apparatus comprising:
a memory to store instructions; and
a processor configured to execute the instructions to:
obtain dentition data associated with a patient;
generate a computer model of teeth of the patient, the computer model to identify placement of the orthodontic appliance to one of the teeth; and
cause construction, using an additive manufacturing process, of the indirect bonding tray (200) based on at least one of the dentition data or the computer model, the indirect bonding tray (200) comprising:
an occlusal base (204) having an outer perimeter and defining a first impression (104) conforming to a first occlusal tooth surface and a second impression (106) conforming to at least a portion of a second occlusal tooth surface;
a buccal wall (110) defining a well (112) to releasably engage the orthodontic appliance, the buccal wall (110) extending outwards beyond the outer perimeter of the occlusal base (204), wherein:
the buccal wall (110) and the well (112) are in a first region (114) of the indirect bonding tray (200) associated with the first impression (104);
the first region (114) is adjacent to a second region (122) of the indirect bonding tray (200) associated with the second impression (106); and
an outer wall of the second region (122) extends to the outer perimeter of the occlusal base (204); and
a perforation (202) defined in the second region (122) and including a portion of the second impression (106), the perforation (202) configured to allow the second region (122) to be removed from the first region (114) while leaving the first impression (104) substantially fully intact after the second region (122) is removed.

23. At least one computer-readable storage medium comprising instructions that, when executed, cause a processor to:
obtain dentition data associated with a patient;
generate a computer model of teeth of the patient, the computer model to identify placement of an orthodontic appliance to one of the teeth; and
cause construction, using an additive manufacturing process, of an indirect bonding tray (200) based on at least one of the dentition data or the computer model, the indirect bonding tray (200) comprising:
an occlusal base (204) having an outer perimeter and defining a first impression (104) conforming to a first occlusal tooth surface and a second impression (106) conforming to at least a portion of a second occlusal tooth surface;
a buccal wall (110) defining a well (112) to releasably engage the orthodontic appliance, the buccal wall (110) extending outwards beyond the outer perimeter of the occlusal base (204), wherein:
the buccal wall (110) and the well (112) are in a first region (114) of the indirect bonding tray (200) associated with the first impression (104);
the first region (114) is adjacent to a second region (122) of the indirect bonding tray (200) associated with the second impression (106); and
an outer wall of the second region (122) extends to the outer perimeter of the occlusal base (204); and
a perforation (202) defined in the second region (122) and including a portion of the second impression (106), the perforation (202) configured to allow the second region (122) to be removed from the first region (114) while leaving the first impression (104) substantially fully intact after the second region (122) is removed.

24. A method for constructing an indirect bonding tray (200) for transferring an orthodontic appliance to a tooth, the method comprising:
measuring dentition data associated with a patient;
generating a computer model of teeth of the patient, the computer model to identify placement of the orthodontic appliance to one of the teeth; and
constructing, using an additive manufacturing process, the indirect bonding tray (200) based on at least one of the dentition data or the computer model, the indirect bonding tray (200) comprising:
an occlusal base (204) having an outer perimeter and defining a first impression (104) conforming to a first occlusal tooth surface and a second impression (106) conforming to at least a portion of a second occlusal tooth surface;
a buccal wall (110) defining a well (112) to releasably engage the orthodontic appliance, the buccal wall (110) extending outwards beyond the outer perimeter of the occlusal base (204), wherein:
the buccal wall (110) and the well (112) are in a first region (114) of the indirect bonding tray (200) associated with the first impression (104);
the first region (114) is adjacent to a second region (122) of the indirect bonding tray (200) associated with the second impression (106); and
an outer wall of the second region (122) extends to the outer perimeter of the occlusal base (204); and
a perforation (202) defined in the second region (122) and including a portion of the second impression (106), the perforation (202) configured to allow the second region (122) to be removed from the first region (114) while leaving the first impression (104) substantially fully intact after the second region (122) is removed.

## Patentansprüche

1. Indirekte Bondingschiene (200) zum Übertragen einer kieferorthopädischen Vorrichtung auf einen Zahn, wobei die indirekte Bondingschiene (200) umfasst:
eine okklusale Basis (204), die einen Außenumfang aufweist und einen ersten Abdruck (104) definiert, der einer ersten okklusalen Zahnoberfläche entspricht, sowie einen zweiten Abdruck (106) definiert, der zumindest einem Abschnitt einer zweiten okklusalen Zahnoberfläche entspricht;
eine bukkale Wand (110), die eine Vertiefung (112) definiert, um die kieferorthopädische Vorrichtung lösbar in Eingriff zu nehmen, wobei sich die bukkale Wand (110) über den Außenumfang der okklusalen Basis (204) hinaus nach außen erstreckt, wobei:
die bukkale Wand (110) und die Vertiefung (112) in einem ersten Bereich (114) der indirekten Bondingschiene (200) liegen, welcher dem ersten Abdruck (104) zugeordnet ist;
der erste Bereich (114) an einen zweiten Bereich (122) der indirekten Bondingschiene (200) angrenzt, welcher dem zweiten Abdruck (106) zugeordnet ist; und
eine Außenwand des zweiten Bereichs (122) sich bis zum Außenumfang der okklusalen Basis (204) erstreckt; und
eine Perforation (202), die in dem zweiten Bereich (122) definiert ist und einen Abschnitt des zweiten Abdrucks (106) einschließt, wobei die Perforation (202) so ausgebildet ist, dass der zweite Bereich (122) von dem ersten Bereich (114) entfernt werden kann, während der erste Abdruck (104) nach dem Entfernen des zweiten Bereichs (122) im Wesentlichen vollständig intakt bleibt.

2. Indirekte Bondingschiene (200) nach Anspruch 1, wobei sich zumindest ein Abschnitt der Vertiefung (112) über eine Oberseite des zweiten Bereichs (122) hinaus, über den Außenumfang der okklusalen Basis (204) hinaus oder beides erstreckt.

3. Indirekte Bondingschiene (200) nach Anspruch 1, wobei mindestens entweder die Basis der Vertiefung (112) oder eine oder mehrere Seiten der Vertiefung (112) in einem Winkel relativ zu einer Oberseite des zweiten Bereichs (122) versetzt ist.

4. Indirekte Bondingschiene (200) nach Anspruch 1, wobei die kieferorthopädische Vorrichtung eine erste kieferorthopädische Vorrichtung ist und der zweite Bereich (122) nicht dazu ausgelegt ist, eine zweite kieferorthopädische Vorrichtung lösbar in Eingriff zu nehmen.

5. Indirekte Bondingschiene (200) nach Anspruch 1, ferner umfassend eine linguale Wand (126), die so ausgebildet ist, dass sie zumindest einen Abschnitt des Zahns abdeckt, wobei die linguale Wand der bukkalen Wand (110) gegenüberliegt.

6. Indirekte Bondingschiene (200) nach Anspruch 1, wobei der Zahn ein erster Zahn ist, die bukkale Wand (110) eine erste bukkale Wand (110) ist, und ferner umfassend eine zweite bukkale Wand (110), die so ausgebildet ist, dass sie zumindest einen Abschnitt eines zweiten Zahns abdeckt, wobei der zweite Zahn an den ersten Zahn angrenzen soll.

7. Indirekte Bondingschiene (200) nach Anspruch 1, wobei der Zahn ein erster Zahn ist und ferner umfassend eine linguale Wand (126), die so ausgebildet ist, dass sie mindestens einen Abschnitt einer lingualen Oberfläche eines zweiten Zahns abdeckt, wobei der zweite Zahn an den ersten Zahn angrenzen soll.

8. Indirekte Bondingschiene (200) nach Anspruch 1, wobei der Zahn ein erster Zahn ist und der zweite Abdruck (106) einem Abschnitt einer dritten okklusalen Zahnoberfläche eines zweiten Zahns entspricht, wobei der zweite Zahn an den ersten Zahn angrenzen soll.

9. Indirekte Bondingschiene (200) nach Anspruch 1, wobei der erste Abdruck (104) und der zweite Abdruck (106) auf einer ersten Oberfläche der okklusalen Basis (204) liegen, und ferner umfassend mindestens eine Aussparung, die in einer zweiten Oberfläche der okklusalen Basis (204) definiert ist, wobei die zweite Oberfläche der ersten Oberfläche gegenüberliegt.

10. Indirekte Bondingschiene (200) nach Anspruch 1, wobei der Zahn ein Backenzahn ist.

11. Indirekte Bondingschiene (200) nach Anspruch 1, wobei der Zahn ein zweiter Backenzahn ist und der zweite Abdruck (106) so ausgebildet ist, dass er lösbar mit einem ersten Backenzahn in Eingriff kommt.

12. Indirekte Bondingschiene (200) nach Anspruch 1, wobei der erste Abdruck (104) distal zum zweiten Abdruck (106) angeordnet ist.

13. Indirekte Bondingschiene (200) nach Anspruch 1, wobei der erste Abdruck (104) mesial zum zweiten Abdruck (106) angeordnet ist.

14. Indirekte Bondingschiene (200) nach Anspruch 1, wobei die kieferorthopädische Vorrichtung ein Molarenröhrchen ist.

15. Indirekte Bondingschiene (200) nach Anspruch 1, wobei die kieferorthopädische Vorrichtung ein kieferorthopädisches Bracket ist.

16. Indirekte Bondingschiene (200) nach Anspruch 1, wobei die kieferorthopädische Vorrichtung eine Hilfsvorrichtung ist.

17. Indirekte Bondingschiene (200) nach Anspruch 16, wobei die Hilfsvorrichtung ein Bite-Turbo, ein Buttoon oder ein Hook ist.

18. Indirekte Bondingschiene (200) nach Anspruch 1, wobei die Vertiefung (112) einer bukkalen Außenfläche eines Molarenröhrchens des Zahns entspricht.

19. Indirekte Bondingschiene (200) nach Anspruch 1, wobei der Zahn ein erster Zahn ist, der zweite Abdruck (106) einem zweiten Zahn zugeordnet ist und die okklusale Basis (204) einen dritten Abdruck definiert, der zumindest einem Abschnitt einer okklusalen Oberfläche eines dritten Zahns entspricht.

20. Indirekte Bondingschiene (200) nach Anspruch 19, wobei der dritte Abdruck angrenzend an den ersten Abdruck (104) angeordnet ist.

21. Indirekte Bondingschiene (200) nach Anspruch 1, wobei die okklusale Basis (204) unter dem zweiten Abdruck (106) verjüngt ist.

22. Vorrichtung zum Herstellen einer indirekten Bondingschiene (200) zum Übertragen einer kieferorthopädischen Vorrichtung auf einen Zahn, wobei die Vorrichtung umfasst:
einen Speicher zum Speichern von Anweisungen; und
einen Prozessor, der so ausgebildet ist, dass er die Anweisungen ausführt, um:
Gebissdaten zu erhalten, die einem Patienten zugeordnet sind;
ein Computermodell von Zähnen des Patienten zu erzeugen, wobei das Computermodell dazu dient, die Platzierung der kieferorthopädischen Vorrichtung an einem der Zähne zu identifizieren; und
die Herstellung der indirekten Bondingschiene (200) unter Verwendung eines additiven Fertigungsverfahrens, basierend auf den Gebissdaten und/oder dem Computermodell, zu veranlassen, wobei die indirekte Bondingschiene (200) umfasst:
eine okklusale Basis (204), die einen Außenumfang aufweist und einen ersten Abdruck (104) definiert, der einer ersten okklusalen Zahnoberfläche entspricht, sowie einen zweiten Abdruck (106) definiert, der zumindest einem Abschnitt einer zweiten okklusalen Zahnoberfläche entspricht;
eine bukkale Wand (110), die eine Vertiefung (112) definiert, um die kieferorthopädische Vorrichtung lösbar in Eingriff zu nehmen, wobei sich die bukkale Wand (110) über den Außenumfang der okklusalen Basis (204) hinaus nach außen erstreckt, wobei:
die bukkale Wand (110) und die Vertiefung (112) in einem ersten Bereich (114) der indirekten Bondingschiene (200) liegen, welcher dem ersten Abdruck (104) zugeordnet ist;
der erste Bereich (114) an einen zweiten Bereich (122) der indirekten Bondingschiene (200) angrenzt, welcher dem zweiten Abdruck (106) zugeordnet ist; und
eine Außenwand des zweiten Bereichs (122) sich bis zum Außenumfang der okklusalen Basis (204) erstreckt; und
eine Perforation (202), die in dem zweiten Bereich (122) definiert ist und einen Abschnitt des zweiten Abdrucks (106) einschließt, wobei die Perforation (202) so ausgebildet ist, dass der zweite Bereich (122) von dem ersten Bereich (114) entfernt werden kann, während der erste Abdruck (104) nach dem Entfernen des zweiten Bereichs (122) im Wesentlichen vollständig intakt bleibt.

23. Mindestens ein computerlesbares Speichermedium, das Anweisungen umfasst, die bei ihrer Ausführung einen Prozessor veranlassen zum:
Erhalten von Gebissdaten, die einem Patienten zugeordnet sind;
Erzeugen eines Computermodells der Zähne des Patienten, wobei das Computermodell dazu dient, die Platzierung einer kieferorthopädischen Vorrichtung an einem der Zähne zu identifizieren; und
Veranlassen der Herstellung einer indirekten Bondingschiene (200) unter Verwendung eines additiven Fertigungsverfahrens, basierend auf den Gebissdaten und/oder dem Computermodell, wobei die indirekte Bondingschiene (200) umfasst:
eine okklusale Basis (204), die einen Außenumfang aufweist und einen ersten Abdruck (104) definiert, der einer ersten okklusalen Zahnoberfläche entspricht, sowie einen zweiten Abdruck (106) definiert, der zumindest einem Abschnitt einer zweiten okklusalen Zahnoberfläche entspricht;
eine bukkale Wand (110), die eine Vertiefung (112) definiert, um die kieferorthopädische Vorrichtung lösbar in Eingriff zu nehmen, wobei sich die bukkale Wand (110) über den Außenumfang der okklusalen Basis (204) hinaus nach außen erstreckt, wobei:
die bukkale Wand (110) und die Vertiefung (112) in einem ersten Bereich (114) der indirekten Bondingschiene (200) liegen, welcher dem ersten Abdruck (104) zugeordnet ist;
der erste Bereich (114) an einen zweiten Bereich (122) der indirekten Bondingschiene (200) angrenzt, welcher dem zweiten Abdruck (106) zugeordnet ist; und
eine Außenwand des zweiten Bereichs (122) sich bis zum Außenumfang der okklusalen Basis (204) erstreckt; und
eine Perforation (202), die in dem zweiten Bereich (122) definiert ist und einen Abschnitt des zweiten Abdrucks (106) einschließt, wobei die Perforation (202) so ausgebildet ist, dass der zweite Bereich (122) von dem ersten Bereich (114) entfernt werden kann, während der erste Abdruck (104) nach dem Entfernen des zweiten Bereichs (122) im Wesentlichen vollständig intakt bleibt.

24. Verfahren zum Herstellen einer indirekten Bondingschiene (200) zum Übertragen einer kieferorthopädischen Vorrichtung auf einen Zahn, wobei das Verfahren umfasst:
Messen von Gebissdaten, die einem Patienten zugeordnet sind;
Erzeugen eines Computermodells der Zähne des Patienten, wobei das Computermodell dazu dient, die Platzierung der kieferorthopädischen Vorrichtung an einem der Zähne zu identifizieren; und
Herstellen der indirekten Bondingschiene (200) unter Verwendung eines additiven Fertigungsverfahrens, basierend auf den Gebissdaten und/oder dem Computermodell, wobei die indirekte Bondingschiene (200) umfasst:
eine okklusale Basis (204), die einen Außenumfang aufweist und einen ersten Abdruck (104) definiert, der einer ersten okklusalen Zahnoberfläche entspricht, sowie einen zweiten Abdruck (106) definiert, der zumindest einem Abschnitt einer zweiten okklusalen Zahnoberfläche entspricht;
eine bukkale Wand (110), die eine Vertiefung (112) definiert, um die kieferorthopädische Vorrichtung lösbar in Eingriff zu nehmen, wobei sich die bukkale Wand (110) über den Außenumfang der okklusalen Basis (204) hinaus nach außen erstreckt, wobei:
die bukkale Wand (110) und die Vertiefung (112) in einem ersten Bereich (114) der indirekten Bondingschiene (200) liegen, welcher dem ersten Abdruck (104) zugeordnet ist;
der erste Bereich (114) an einen zweiten Bereich (122) der indirekten Bondingschiene (200) angrenzt, welcher dem zweiten Abdruck (106) zugeordnet ist; und
eine Außenwand des zweiten Bereichs (122) sich bis zum Außenumfang der okklusalen Basis (204) erstreckt; und
eine Perforation (202), die in dem zweiten Bereich (122) definiert ist und einen Abschnitt des zweiten Abdrucks (106) einschließt, wobei die Perforation (202) so ausgebildet ist, dass der zweite Bereich (122) von dem ersten Bereich (114) entfernt werden kann, während der erste Abdruck (104) nach dem Entfernen des zweiten Bereichs (122) im Wesentlichen vollständig intakt bleibt.

## Revendications

1. Porte-empreinte de collage indirect (200) pour le transfert d'un appareil orthodontique sur une dent, le porte-empreinte de collage indirect (200) comprenant :
une base occlusale (204) ayant un périmètre extérieur et définissant une première empreinte (104) se conformant à une première surface de dent occlusale et une deuxième empreinte (106) se conformant à au moins une partie d'une deuxième surface de dent occlusale ;
une paroi buccale (110) définissant un puits (112) pour venir en prise amovible avec l'appareil orthodontique, la paroi buccale (110) s'étendant vers l'extérieur au-delà du périmètre extérieur de la base occlusale (204), dans lequel :
la paroi buccale (110) et le puits (112) sont dans une première région (114) du porte-empreinte de collage indirect (200) associée à la première empreinte (104) ;
la première région (114) est adjacente à une deuxième région (122) du porte-empreinte de collage indirect (200) associée à la deuxième empreinte (106) ; et
une paroi extérieure de la deuxième région (122) s'étend jusqu'au périmètre extérieur de la base occlusale (204) ; et
une perforation (202) définie dans la deuxième région (122) et comportant une partie de la deuxième empreinte (106), la perforation (202) étant configurée pour permettre à la deuxième région (122) d'être retirée de la première région (114) tout en laissant la première empreinte (104) sensiblement complètement intacte après que la deuxième région (122) a été retirée.

2. Porte-empreinte de collage indirect (200) selon la revendication 1, dans lequel au moins une partie du puits (112) s'étend au-dessus d'une surface supérieure de la deuxième région (122), au-delà du périmètre extérieur de la base occlusale (204), ou les deux.

3. Porte-empreinte de collage indirect (200) selon la revendication 1, dans lequel au moins un parmi une base du puits (112) ou un ou plusieurs côtés du puits (112) sont décalés d'un angle par rapport à une surface supérieure de la deuxième région (122).

4. Porte-empreinte de collage indirect (200) selon la revendication 1, dans lequel l'appareil orthodontique est un premier appareil orthodontique, et la deuxième région (122) n'est pas configurée pour venir en prise amovible avec un deuxième appareil orthodontique.

5. Porte-empreinte de collage indirect (200) selon la revendication 1, comprenant en outre une paroi linguale (126) configurée pour couvrir au moins une partie de la dent, la paroi linguale étant opposée à la paroi buccale (110).

6. Porte-empreinte de collage indirect (200) selon la revendication 1, dans lequel la dent est une première dent, la paroi buccale (110) est une première paroi buccale (110), et comprenant en outre une deuxième paroi buccale (110) configurée pour couvrir au moins une partie d'une deuxième dent, la deuxième dent devant être adjacente à la première dent.

7. Porte-empreinte de collage indirect (200) selon la revendication 1, dans lequel la dent est une première dent, et comprenant en outre une paroi linguale (126) configurée pour couvrir au moins une partie d'une surface linguale d'une deuxième dent, la deuxième dent devant être adjacente à la première dent.

8. Porte-empreinte de collage indirect (200) selon la revendication 1, dans lequel la dent est une première dent et la deuxième empreinte (106) se conforme à une partie d'une troisième surface de dent occlusale d'une deuxième dent, la deuxième dent devant être adjacente à la première dent.

9. Porte-empreinte de collage indirect (200) selon la revendication 1, dans lequel la première empreinte (104) et la deuxième empreinte (106) sont sur une première surface de la base occlusale (204), et comprenant en outre au moins un évidement défini dans une deuxième surface de la base occlusale (204), la deuxième surface étant opposée à la première surface.

10. Porte-empreinte de collage indirect (200) selon la revendication 1, dans lequel la dent est une molaire.

11. Porte-empreinte de collage indirect (200) selon la revendication 1, dans lequel la dent est une deuxième molaire, et la deuxième empreinte (106) est configurée pour venir en prise amovible avec une première molaire.

12. Porte-empreinte de collage indirect (200) selon la revendication 1, dans lequel la première empreinte (104) est distale de la deuxième empreinte (106).

13. Porte-empreinte de collage indirect (200) selon la revendication 1, dans lequel la première empreinte (104) est mésiale de la deuxième empreinte (106).

14. Porte-empreinte de collage indirect (200) selon la revendication 1, dans lequel l'appareil orthodontique est un tube molaire.

15. Porte-empreinte de collage indirect (200) selon la revendication 1, dans lequel l'appareil orthodontique est une bague orthodontique.

16. Porte-empreinte de collage indirect (200) selon la revendication 1, dans lequel l'appareil orthodontique est un appareil auxiliaire.

17. Porte-empreinte de collage indirect (200) selon la revendication 16, dans lequel l'appareil auxiliaire est un bite turbo, un bouton ou un crochet.

18. Porte-empreinte de collage indirect (200) selon la revendication 1, dans lequel le puits (112) se conforme à une surface extérieure d'une surface buccale de tube molaire de la dent.

19. Porte-empreinte de collage indirect (200) selon la revendication 1, dans lequel la dent est une première dent, la deuxième empreinte (106) est associée à une deuxième dent, et la base occlusale (204) définit une troisième empreinte se conformant à au moins une partie d'une surface occlusale d'une troisième dent.

20. Porte-empreinte de collage indirect (200) selon la revendication 19, dans lequel la troisième empreinte est adjacente à la première empreinte (104).

21. Porte-empreinte de collage indirect (200) selon la revendication 1, dans lequel la base occlusale (204) est effilée sous la deuxième empreinte (106).

22. Appareil de construction d'un porte-empreinte de collage indirect (200) pour le transfert d'un appareil orthodontique sur une dent, l'appareil comprenant :
une mémoire pour stocker des instructions ; et
un processeur configuré pour exécuter les instructions pour :
obtenir des données de dentition associées à un patient ;
générer un modèle informatique des dents du patient, le modèle informatique devant identifier le placement de l'appareil orthodontique sur une des dents ; et
provoquer la construction, à l'aide d'un processus de fabrication additif, du porte-empreinte de collage indirect (200) sur la base d'au moins un parmi les données de dentition ou le modèle informatique, le porte-empreinte de collage indirect (200) comprenant :
une base occlusale (204) ayant un périmètre extérieur et définissant une première empreinte (104) se conformant à une première surface de dent occlusale et une deuxième empreinte (106) se conformant à au moins une partie d'une deuxième surface de dent occlusale ;
une paroi buccale (110) définissant un puits (112) pour venir en prise amovible avec l'appareil orthodontique, la paroi buccale (110) s'étendant vers l'extérieur au-delà du périmètre extérieur de la base occlusale (204), dans lequel :
la paroi buccale (110) et le puits (112) sont dans une première région (114) du porte-empreinte de collage indirect (200) associée à la première empreinte (104) ;
la première région (114) est adjacente à une deuxième région (122) du porte-empreinte de collage indirect (200) associée à la deuxième empreinte (106) ; et
une paroi extérieure de la deuxième région (122) s'étend jusqu'au périmètre extérieur de la base occlusale (204) ; et
une perforation (202) définie dans la deuxième région (122) et comportant une partie de la deuxième empreinte (106), la perforation (202) étant configurée pour permettre à la deuxième région (122) d'être retirée de la première région (114) tout en laissant la première empreinte (104) sensiblement complètement intacte après que la deuxième région (122) a été retirée.

23. Au moins un support de stockage lisible par ordinateur comprenant des instructions qui, lorsqu'elles sont exécutées, amènent un processeur à :
obtenir des données de dentition associées à un patient ;
générer un modèle informatique des dents du patient, le modèle informatique devant identifier le placement d'un appareil orthodontique sur une des dents ; et
provoquer la construction, à l'aide d'un processus de fabrication additif, d'un porte-empreinte de collage indirect (200) sur la base d'au moins un parmi les données de dentition ou le modèle informatique, le porte-empreinte de collage indirect (200) comprenant :
une base occlusale (204) ayant un périmètre extérieur et définissant une première empreinte (104) se conformant à une première surface de dent occlusale et une deuxième empreinte (106) se conformant à au moins une partie d'une deuxième surface de dent occlusale ;
une paroi buccale (110) définissant un puits (112) pour venir en prise amovible avec l'appareil orthodontique, la paroi buccale (110) s'étendant vers l'extérieur au-delà du périmètre extérieur de la base occlusale (204), dans lequel :
la paroi buccale (110) et le puits (112) sont dans une première région (114) du porte-empreinte de collage indirect (200) associée à la première empreinte (104) ;
la première région (114) est adjacente à une deuxième région (122) du porte-empreinte de collage indirect (200) associée à la deuxième empreinte (106) ; et
une paroi extérieure de la deuxième région (122) s'étend jusqu'au périmètre extérieur de la base occlusale (204) ; et
une perforation (202) définie dans la deuxième région (122) et comportant une partie de la deuxième empreinte (106), la perforation (202) étant configurée pour permettre à la deuxième région (122) d'être retirée de la première région (114) tout en laissant la première empreinte (104) sensiblement complètement intacte après que la deuxième région (122) a été retirée.

24. Procédé de construction d'un porte-empreinte de collage indirect (200) pour le transfert d'un appareil orthodontique sur une dent, le procédé comprenant :
la mesure de données de dentition associées à un patient ;
la génération d'un modèle informatique des dents du patient, le modèle informatique devant identifier le placement de l'appareil orthodontique sur une des dents ; et
la construction, à l'aide d'un processus de fabrication additif, du porte-empreinte de collage indirect (200) sur la base d'au moins un parmi les données de dentition ou le modèle informatique, le porte-empreinte de collage indirect (200) comprenant :
une base occlusale (204) ayant un périmètre extérieur et définissant une première empreinte (104) se conformant à une première surface de dent occlusale et une deuxième empreinte (106) se conformant à au moins une partie d'une deuxième surface de dent occlusale ;
une paroi buccale (110) définissant un puits (112) pour venir en prise amovible avec l'appareil orthodontique, la paroi buccale (110) s'étendant vers l'extérieur au-delà du périmètre extérieur de la base occlusale (204), dans lequel :
la paroi buccale (110) et le puits (112) sont dans une première région (114) du porte-empreinte de collage indirect (200) associée à la première empreinte (104) ;
la première région (114) est adjacente à une deuxième région (122) du porte-empreinte de collage indirect (200) associée à la deuxième empreinte (106) ; et
une paroi extérieure de la deuxième région (122) s'étend jusqu'au périmètre extérieur de la base occlusale (204) ; et
une perforation (202) définie dans la deuxième région (122) et comportant une partie de la deuxième empreinte (106), la perforation (202) étant configurée pour permettre à la deuxième région (122) d'être retirée de la première région (114) tout en laissant la première empreinte (104) sensiblement complètement intacte après que la deuxième région (122) a été retirée.
